# EUROPEAN PATENT SPECIFICATION

(11) **EP 4 561 135 B1**
(45) Date of publication and mention of the grant of the patent: **27.05.2026**
(21) Application number: 25170140.5
(22) Date of filing: 15.12.2021
(51) Int. Cl.: H04W 12/041, H04W 12/043, H04W 12/06

(54) **USER EQUIPMENT (UE) IDENTIFIER REQUEST**
BENUTZERGERÄTEIDENTIFIKATORANFRAGE
DEMANDE D'IDENTIFIANT D'ÉQUIPEMENT UTILISATEUR (UE)

(30) Priority: 11.01.2021 WO PCT/CN2021/071101
(43) Date of publication of application: 28.05.2025
(62) Divisional of application: 21839482.3
(73) Proprietor: Telefonaktiebolaget LM Ericsson (publ), 164 83 Stockholm (SE)
(72) Inventor: KARAKOC, Ferhat, 34912 Istanbul (TR); JOST, Christine, 247 52 Dalby (SE); WANG, Chen, Shanghai 200335 (CN); LEHTOVIRTA, Vesa, 02620 Espoo (FI); TSIATSIS, Vlasios, 112 15 Stockholm (SE)
(74) Representative: Ericsson

(56) References cited:
- WO-A1-2020/226454
- QUALCOMM INCORPORATED: "Sending UE identifier to the AKMA AF", vol. SA WG3, no. e-meeting; 20201109 - 20201120, 30 October 2020 (2020-10-30), XP051949767, Retrieved from the Internet <URL:https://ftp.3gpp.org/tsg_sa/WG3_Security/TSGS3_101e/Docs/S3-203191.zip S3-203191.docx> [retrieved on 20201030]
- QUALCOMM INCORPORATED: "Corrections and clarifications to AKMA procedures", vol. SA WG3, no. e-meeting; 20200817 - 20200828, 8 September 2020 (2020-09-08), XP051932751, Retrieved from the Internet <URL:https://ftp.3gpp.org/tsg_sa/TSG_SA/TSGs_89E_Electronic/Docs/SP-200708.zip 33535_CR0025r1_AKMA_(Rel-16)_S3-202205.docx> [retrieved on 20200908]

## Description

### TECHNICAL FIELD

The present application relates generally to the field of wireless communication networks, and more specifically to improved techniques for authenticating a user equipment (UE) in a communication network.

### BACKGROUND

Currently the fifth generation ("5G") of cellular systems, also referred to as New Radio (NR), is being standardized within the Third-Generation Partnership Project (3GPP). NR is developed for maximum flexibility to support multiple and substantially different use cases. Besides the typical mobile broadband use case, also machine type communication (MTC), ultra-low latency critical communications (URLCC), side-link device-to-device (D2D), and several other use cases.

3GPP security working group SA3 specified the security-related features for Release 15 (Rel-15) of the 5G System (5GS) in 3GPP TS 33.501 (v15.11.0). In particular, the 5GS includes many new features (e.g., as compared to earlier 4G/LTE systems) that required introduction of new security mechanisms. For example, 5GS seamlessly integrates non-3GPP access (e.g., via wireless LAN) together with 3GPP access (e.g., NR and/or LTE). As such, in 5GS, a user equipment (UE, e.g., wireless device) can access services independent of underlying radio access technology (RAT).

3GPP Rel-16 introduces a new feature called authentication and key management for applications (AKMA) that is based on 3GPP user credentials in 5G, including the Internet of Things (IoT) use case. More specifically, AKMA leverages the user's Authentication and Key Agreement (AKA) credentials to bootstrap security between the UE and an application function (AF), which allows the UE to securely exchange data with an application server. The AKMA architecture can be considered an evolution of Generic Bootstrapping Architecture (GBA) specified for 5GC in Rel-15 and is further specified in 3GPP TS 33.535 (v.16.2.0).

As further defined in 3GPP TS 33.535, the network and the UE derive an K_{AKMA} key and an associated A-KID, as well as a K_{AF} key. K_{AF} is used to support of the security of the communication between the UE and an Application Function (AF), and A-KID is AKMA Key IDentifier of the root key (i.e., K_{AKMA}) that is used to derive K_{AF}. More specifically, A-KID includes an AKMA Temporary UE Identifier (A-TID) and routing information related to the UE's home network (HPLMN).

The 3GPP Rel-17 study on "Security Aspects of Enhancement of Support for Edge Computing in 5GC" includes requirements for authentication of UE identities to Edge Computing Servers. 3GPP TS 23.558 (v1.2.0) specifies different interactions between Edge Enabler Client (EEC) and Edge Enabler Server (EES) or Edge Configuration Server (ECS) that use a UE ID for identifying the UE. The UE ID is specified in 3GPP TS 23.558 section 7.2.6, with the only example being a generic public subscription identifier (GPSI).

In the context of AKMA, another possible UE ID is the A-KID discussed above, which can be seen as a temporary UE ID. However, there are various problems, issues, and/or difficulties with using the A-KID as for authentication of the UE as discussed for Rel-17.

### SUMMARY

The invention is defined by the appended claims.

Accordingly, exemplary embodiments of the present disclosure address these and other problems, issues, and/or difficulties associated with authenticating a UE for an application session, thereby facilitating the otherwise-advantageous deployment of a secure SBA for 5G.

Some embodiments of the present disclosure include exemplary methods (e.g., procedures) performed by an application function (AF) associated with a communication network. These exemplary methods can be performed by any appropriate type of AF.

These exemplary methods can include sending, to a network function (NF) of the communication network, a key request for a security key (K_{AF}) associated with an application session between the AF and a user equipment (UE). The key request can include a request for a first identifier of the UE or a second identifier of the UE. These exemplary methods can also include receiving, from the NF, a response that includes the security key (K_{AF}) and one of the following: the first identifier, or a response code associated with the second identifier or the first identifier. These exemplary methods can also include authenticating the UE for the application session based on the response.

In some embodiments, authenticating the UE for the application session can be based on one of the following:
- determining a match between the second identifier in the key request and the first identifier in the response;
- the response code indicates that the second identifier matches an identifier of the UE that is stored in the communication network; or
- the key request includes the second identifier, and the response code is absent from the response.

In some embodiments, these exemplary methods can also include receiving, from the UE, an establishment request for the application session. In some of these embodiments, the second identifier can be included in the key request and one of the following applies:
- the second identifier is received in the establishment request; or
- the second identifier is locally stored at the AF.

In some of these embodiments, the second identifier can be a generic public subscription identifier (GPSI) of the UE, and the first identifier received in the response can be a GPSI stored in the communication network. In some of these embodiments, the second identifier can be a subscription permanent identifier (SUPI) of the UE, and the first identifier received in the response can be a SUPI stored in the communication network. In some of these embodiments, the establishment request and the key request can include an identifier (A-KID) of a security key (K_{AKMA}) associated with the UE. In some embodiments, the key request can include an identifier of the AF (e.g., AF_ID).

In some embodiments, the AF can be part of the communication network. In such embodiments, the key request can be sent to and the response received from an anchor function for authentication and key management for applications (AAnF) in the communication network. In other embodiments, the AF can be outside of the communication network. In such embodiments, the key request can be sent to and the response received from a network exposure function (NEF) in the communication network. Other embodiments include exemplary methods (e.g., procedures) performed by a network exposure function (NEF) of a communication network.

These exemplary methods can include receiving, from an application function (AF) outside of the communication network, a key request for a security key (K_{AF}) associated with an application session between the AF and a user equipment (UE). The key request can include a request for a first identifier of the UE or a second identifier of the UE. These exemplary methods can also include sending, to the AF, a response that includes the security key (K_{AF}) and one of the following the first identifier, or a response code associated with the second identifier or the first identifier.

In some embodiments, these exemplary methods can also include determining whether the first identifier of the UE is stored locally at the NEF. In such embodiments, these exemplary methods can also include, based on determining that the first identifier of the UE is stored locally, determining whether the second identifier received from the AF matches the locally-stored first identifier. In such case, the response code sent to the AF can indicate whether the second identifier received from the AF matches the locally-stored first identifier.

In some of these embodiments, these exemplary methods can also include, based on determining that the first identifier is not stored locally, sending, to an AAnF in the communication network (e.g., selected by the NEF), a key request for the security key (K_{AF}) that includes one of the following:
- a request for the first identifier of the UE,
- the first identifier, retrieved from a unified data management function (UDM) of the communication network, or
- the second identifier received from the AF.
In such embodiments, these exemplary methods can also include receiving, from the AAnF, a response that includes the security key (K_{AF}) and one of the following: the first identifier or a response code associated with the second identifier or the first identifier. In some embodiments, the information received from the AAnF can be forwarded as the response to the AF.

In some of these embodiments, the response code can indicate one of the following matches an identifier of the UE that is stored in the AAnF:
- the first identifier, when it is included in the key request to the AAnF; or
- the second identifier, when it is included in the key request to the AAnF.
In other of these embodiments, the response code can indicate that the first identifier is unavailable to the AF, e.g., due to lack of access privileges.

In some embodiments, the second identifier in the key request can be a generic public subscription identifier (GPSI) of the UE, and the response sent to the AF can include one of the following: a GPSI stored in the communication network, or a response code indicating that the second identifier matches a GPSI stored in the communication network.

In some embodiments, when the key request includes the second identifier, an absence of the response code in the response indicates that the second identifier matches an identifier of the UE stored in the communication network.

In some embodiments, the key request can include an identifier (A-KID) of a security key (K_{AKMA}) associated with the UE.Other embodiments include exemplary methods (e.g., procedures) performed by an anchor function for an authentication and key management for applications (AAnF) in a communication network.

These exemplary methods can include receiving a key request for a security key (K_{AF}) associated with an application session between an application function (AF) and a user equipment (UE). The key request can include a request for a first identifier of the UE or a second identifier of the UE. These exemplary methods can also include sending, to the AF, a response that includes the security key (K_{AF}) and one of the following: the first identifier, or a response code associated with the second identifier or the first identifier. In some embodiments, the second identifier can be a generic public subscription identifier (GPSI) of the UE.

In some embodiments, these exemplary methods can also include determining whether the second identifier received in the key request matches an identifier of the UE that is stored in the communication network. In such case, the response code sent to the AF can indicate whether the second identifier received in the key request matches the first identifier stored in the communication network.

In some embodiments, when the key request includes the second identifier, an absence of the response code in the response can indicate that the second identifier matches an identifier of the UE stored in the communication network.

In some embodiments, these exemplary methods can also include, in response to a request for the first identifier in the key request, determining whether the first identifier is available to the AF. In such case, the response code sent to the AF can indicate whether the first identifier is available to the AF.

In some embodiments, the first and second identifiers are generic public subscription identifiers (GPSIs) or subscription permanent identifiers (SUPIs).

In some embodiments, the key request can include an identifier (A-KID) of a security key (K_{AKMA}) associated with the UE. In such embodiments, these exemplary methods can also include, based on the identifier (A-KID), deriving the security key (K_{AF}) associated with the application session from the security key (K_{AKMA}) associated with the UE.

In some embodiments, the key request can include an identifier of the AF (e.g., AF_ID).

In some embodiments, the AF can be part of the communication network. In such embodiments, the key request can be received from and the sent to the AF. In other embodiments, the AF can be outside of the communication network. In such embodiments, the key request can be received from and the response sent to a network exposure function (NEF) in the communication network.

Other embodiments include AFs, AAnFs, and NEFs (or network nodes hosting the same) that are configured to perform the operations corresponding to any of the exemplary methods described herein. Other embodiments include non-transitory, computer-readable media storing computer-executable instructions that, when executed by processing circuitry, configure such AFs, AAnFs, and NEFs to perform operations corresponding to any of the exemplary methods described herein.

These and other objects, features, and advantages of the present disclosure will become apparent upon reading the following detailed description in view of the drawings briefly described below.

### BRIEF DESCRIPTION OF THE DRAWINGS

Figures 1-2 illustrate various aspects of an exemplary 5G network architecture.
Figure 3 shows an exemplary hierarchy of security keys in a 5G network.
Figure 4 shows a signal flow diagram of an exemplary authentication/authorization procedure between an Edge Enabler Client (EEC) and an Edge Configuration Server (ECS) in a 5G network.
Figure 5 shows a signal flow diagram of an exemplary key generation procedure.
Figures 6-9 show signal flow diagrams of various exemplary procedures for security key generation and/or authentication, according to various embodiments of the present disclosure.
Figure 10 illustrates an exemplary method (e.g., procedure) for an application function (AF) associated with a communication network, according to various exemplary embodiments of the present disclosure.
Figure 11 illustrates an exemplary method (*e*.*g*., procedure) for a network exposure function (NEF) of a communication network, according to various exemplary embodiments of the present disclosure.
Figure 12 illustrates an exemplary method (*e*.*g*., procedure) for an anchor function for authentication and key management for applications (AAnF) in a communication network, according to various exemplary embodiments of the present disclosure.
Figure 13 illustrates a wireless network, according to various exemplary embodiments of the present disclosure.
Figure 14 shows an exemplary embodiment of a UE, in accordance with various aspects described herein.
Figure 15 is a block diagram illustrating an exemplary virtualization environment usable for implementation of various embodiments of network nodes or NFs described herein.
Figures 16-17 are block diagrams of various exemplary communication systems and/or networks, according to various exemplary embodiments of the present disclosure.
Figures 18-21 are flow diagrams of exemplary methods (e.g., procedures) for transmission and/or reception of user data, according to various exemplary embodiments of the present disclosure.

### DETAILED DESCRIPTION

Exemplary embodiments briefly summarized above will now be described more fully with reference to the accompanying drawings. These descriptions are provided by way of example to explain the subject matter to those skilled in the art and should not be construed as limiting the scope of the subject matter to only the embodiments described herein. More specifically, examples are provided below that illustrate the operation of various embodiments according to the advantages discussed above.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods and/or procedures disclosed herein do not have to be performed in the exact order disclosed, unless a step is explicitly described as following or preceding another step and/or where it is implicit that a step must follow or precede another step. Any feature of any of the embodiments disclosed herein can be applied to any other embodiment, wherever appropriate. Likewise, any advantage of any of the embodiments can apply to any other embodiments, and vice versa. Other objects, features and advantages of the disclosed embodiments will be apparent from the following description.

Furthermore, the following terms are used throughout the description given below:
- Radio Access Node: As used herein, a "radio access node" (or equivalently "radio network node," "radio access network node," or "RAN node") can be any node in a radio access network (RAN) of a cellular communications network that operates to wirelessly transmit and/or receive signals. Some examples of a radio access node include, but are not limited to, a base station (*e.g*., a New Radio (NR) base station (gNB) in a 3GPP Fifth Generation (5G) NR network or an enhanced or evolved Node B (eNB) in a 3GPP LTE network), base station distributed components (*e*.*g*., CU and DU), a high-power or macro base station, a low-power base station (*e*.*g*., micro, pico, femto, or home base station, or the like), an integrated access backhaul (IAB) node (or component thereof such as MT or DU), a transmission point, a remote radio unit (RRU or RRH), and a relay node.
- Core Network Node: As used herein, a "core network node" is any type of node in a core network. Some examples of a core network node include, *e.g.,* a Mobility Management Entity (MME), a serving gateway (SGW), a Packet Data Network Gateway (P-GW), etc. A core network node can also be a node that implements a particular core network function (NF), such as an access and mobility management function (AMF), a session management function (AMF), a user plane function (UPF), a Service Capability Exposure Function (SCEF), or the like.
- Wireless Device: As used herein, a "wireless device" (or "WD" for short) is any type of device that has access to (*i.e*., is served by) a cellular communications network by communicate wirelessly with network nodes and/or other wireless devices. Communicating wirelessly can involve transmitting and/or receiving wireless signals using electromagnetic waves, radio waves, infrared waves, and/or other types of signals suitable for conveying information through air. Unless otherwise noted, the term "wireless device" is used interchangeably herein with "user equipment" (or "UE" for short). Some examples of a wireless device include, but are not limited to, smart phones, mobile phones, cell phones, voice over IP (VoIP) phones, wireless local loop phones, desktop computers, personal digital assistants (PDAs), wireless cameras, gaming consoles or devices, music storage devices, playback appliances, wearable devices, wireless endpoints, mobile stations, tablets, laptops, laptop-embedded equipment (LEE), laptop-mounted equipment (LME), smart devices, wireless customer-premise equipment (CPE), mobile-type communication (MTC) devices, Internet-of-Things (IoT) devices, vehicle-mounted wireless terminal devices, mobile terminals (MTs), *etc.*
- Radio Node: As used herein, a "radio node" can be either a "radio access node" (or equivalent term) or a "wireless device."
- Network Node: As used herein, a "network node" is any node that is either part of the radio access network (*e.g*., a radio access node or equivalent term) or of the core network (*e.g*., a core network node discussed above) of a cellular communications network. Functionally, a network node is equipment capable, configured, arranged, and/or operable to communicate directly or indirectly with a wireless device and/or with other network nodes or equipment in the cellular communications network, to enable and/or provide wireless access to the wireless device, and/or to perform other functions (*e*.*g*., administration) in the cellular communications network.
- Node: As used herein, the term "node" (without any prefix) can be any type of node that is capable of operating in or with a wireless network (including a RAN and/or a core network), including a radio access node (or equivalent term), core network node, or wireless device.
- Service: As used herein, the term "service" refers generally to a set of data, associated with one or more applications, that is to be transferred via a network with certain specific delivery requirements that need to be fulfilled in order to make the applications successful.
- Component: As used herein, the term "component" refers generally to any component needed for the delivery of a service. Examples of component are RANs (*e*.*g*., E-UTRAN, NG-RAN, or portions thereof such as eNBs, gNBs, base stations (BS), *etc.*), CNs (*e.g*., EPC, 5GC, or portions thereof, including all type of links between RAN and CN entities), and cloud infrastructure with related resources such as computation, storage. In general, each component can have a "manager", which is an entity that can collect historical information about utilization of resources as well as provide information about the current and the predicted future availability of resources associated with that component (*e.g*., a RAN manager).

Note that the description given herein focuses on a 3GPP cellular communications system and, as such, 3GPP terminology or terminology similar to 3GPP terminology is generally used. However, the concepts disclosed herein are not limited to a 3GPP system. Other wireless systems, including without limitation Wide Band Code Division Multiple Access (WCDMA), Worldwide Interoperability for Microwave Access (WiMax), Ultra Mobile Broadband (UMB) and Global System for Mobile Communications (GSM), may also benefit from the concepts, principles, and/or embodiments described herein.

In addition, functions and/or operations described herein as being performed by a wireless device or a network node may be distributed over a plurality of wireless devices and/or network nodes. Furthermore, although the term "cell" is used herein, it should be understood that (particularly with respect to 5G NR) beams may be used instead of cells and, as such, concepts described herein apply equally to both cells and beams.

At a high level, the 5G System (5GS) consists of an Access Network (AN) and a Core Network (CN). The AN provides UEs connectivity to the CN, e.g., via base stations such as gNBs or ng-eNBs described below. The CN includes a variety of Network Functions (NF) that provide a wide range of different functionalities such as session management, connection management, charging, authentication, etc.

Communication links between the UE and a 5G network (AN and CN) can be grouped in two different strata. The UE communicates with the CN over the Non-Access Stratum (NAS), and with the AN over the Access Stratum (AS). All the NAS communication takes place between the UE and the AMF via the NAS protocol. Security for the communications over this these strata is provided by the NAS protocol (for NAS) and PDCP (for AS).

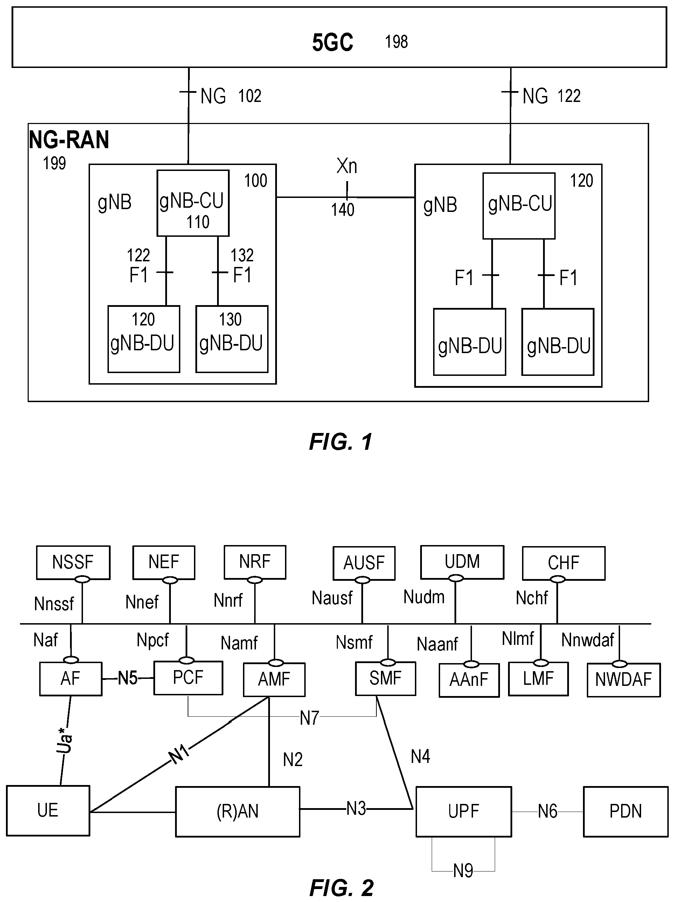

Figure 1 illustrates a high-level view of an exemplary 5G network architecture, consisting of a Next Generation RAN (NG-RAN) 199 and a 5G Core (5GC) 198. NG-RAN 199 can include one or more gNodeB's (gNBs) connected to the 5GC via one or more NG interfaces, such as gNBs 100, 150 connected via interfaces 102, 152, respectively. More specifically, gNBs 100, 150 can be connected to one or more Access and Mobility Management Functions (AMFs) in the 5GC 198 via respective NG-C interfaces. Similarly, gNBs 100, 150 can be connected to one or more User Plane Functions (UPFs) in 5GC 198 via respective NG-U interfaces. Various other network functions (NFs) can be included in the 5GC 198, as described in more detail below.

In addition, the gNBs can be connected to each other via one or more Xn interfaces, such as Xn interface 140 between gNBs 100 and 150. The radio technology for the NG-RAN is often referred to as "New Radio" (NR). With respect the NR interface to UEs, each of the gNBs can support frequency division duplexing (FDD), time division duplexing (TDD), or a combination thereof. Each of the gNBs can serve a geographic coverage area including one more cells and, in some cases, can also use various directional beams to provide coverage in the respective cells.

NG-RAN 199 is layered into a Radio Network Layer (RNL) and a Transport Network Layer (TNL). The NG-RAN architecture, *i.e.,* the NG-RAN logical nodes and interfaces between them, is defined as part of the RNL. For each NG-RAN interface (NG, Xn, F 1) the related TNL protocol and the functionality are specified. The TNL provides services for user plane transport and signaling transport. In some exemplary configurations, each gNB is connected to all 5GC nodes within an "AMF Region" which is defined in 3GPP TS 23.501 (v15.5.0). If security protection for CP and UP data on TNL of NG-RAN interfaces is supported, NDS/IP (3GPP TS 33.401 (v15.8.0) shall be applied.

The NG RAN logical nodes shown in Figure 1 (and described in 3GPP TS 38.401 (v15.6.0) and 3GPP TR 38.801 (v14.0.0) include a Central Unit (CU or gNB-CU) and one or more Distributed Units (DU or gNB-DU). For example, gNB 100 includes gNB-CU 110 and gNB-DUs 120 and 130. CUs (*e.g.,* gNB-CU 110) are logical nodes that host higher-layer protocols and perform various gNB functions such controlling the operation of DUs. A DU (*e.g*., gNB-DUs 120, 130) is a decentralized logical node that hosts lower layer protocols and can include, depending on the functional split option, various subsets of the gNB functions. As such, each of the CUs and DUs can include various circuitry needed to perform their respective functions, including processing circuitry, transceiver circuitry (*e*.*g*., for communication), and power supply circuitry.

A gNB-CU connects to one or more gNB-DUs over respective F1 logical interfaces, such as interfaces 122 and 132 shown in Figure 1. However, a gNB-DU can be connected to only a single gNB-CU. The gNB-CU and connected gNB-DU(s) are only visible to other gNBs and the 5GC as a gNB. In other words, the F1 interface is not visible beyond gNB-CU.

Another change in 5GS (e.g., in 5GC) is that traditional peer-to-peer interfaces and protocols found in earlier-generation networks are modified and/or replaced by a Service Based Architecture (SBA) in which Network Functions (NFs) provide one or more services to one or more service consumers. This can be done, for example, by Hyper Text Transfer Protocol/Representational State Transfer (HTTP/REST) application programming interfaces (APIs). In general, the various services are self-contained functionalities that can be changed and modified in an isolated manner without affecting other services. This SBA model also adopts principles like modularity, reusability, and self-containment of NFs, which can enable deployments to take advantage of the latest virtualization and software technologies.

The services in 5GC can be stateless, such that the business logic and data context are separated. For example, the services can store their context externally in a proprietary database. This can facilitate various cloud infrastructure features like auto-scaling or auto-healing. Furthermore, 5GC services can be composed of various "service operations", which are more granular divisions of overall service functionality. The interactions between service consumers and producers can be of the type "request/response" or "subscribe/notify".

Figure 2 shows an exemplary non-roaming 5G reference architecture with service-based interfaces and various 3GPP-defined NFs within the Control Plane (CP). These include the following NFs, with additional details provided for those most relevant to the present disclosure:
- Application Function (AF, with Naf interface) interacts with the 5GC to provision information to the network operator and to subscribe to certain events happening in operator's network. An AF offers applications for which service is delivered in a different layer (i.e., transport layer) than the one in which the service has been requested (i.e., signaling layer), the control of flow resources according to what has been negotiated with the network. An AF communicates dynamic session information to PCF (via N5 interface), including description of media to be delivered by transport layer.
- Policy Control Function (PCF, with Npcf interface) supports unified policy framework to govern the network behavior, via providing PCC rules (e.g., on the treatment of each service data flow that is under PCC control) to the SMF via the N7 reference point. PCF provides policy control decisions and flow based charging control, including service data flow detection, gating, QoS, and flow-based charging (except credit management) towards the SMF. The PCF receives session and media related information from the AF and informs the AF of traffic (or user) plane events.

- User Plane Function (UPF)- supports handling of user plane traffic based on the rules received from SMF, including packet inspection and different enforcement actions (e.g., event detection and reporting). UPFs communicate with the RAN (e.g., NG-RNA) via the N3 reference point, with SMFs (discussed below) via the N4 reference point, and with an external packet data network (PDN) via the N6 reference point. The N9 reference point is for communication between two UPFs.
   - Session Management Function (SMF, with Nsmf interface) interacts with the decoupled traffic (or user) plane, including creating, updating, and removing Protocol Data Unit (PDU) sessions and managing session context with the User Plane Function (UPF), e.g., for event reporting. For example, SMF performs data flow detection (based on filter definitions included in PCC rules), online and offline charging interactions, and policy enforcement.
   - Charging Function (CHF, with Nchf interface) is responsible for converged online charging and offline charging functionalities. It provides quota management (for online charging), re-authorization triggers, rating conditions, etc. and is notified about usage reports from the SMF. Quota management involves granting a specific number of units (e.g., bytes, seconds) for a service. CHF also interacts with billing systems.
- Access and Mobility Management Function (AMF, with Namf interface) terminates the RAN CP interface and handles all mobility and connection management of UEs (similar to MME in EPC). AMFs communicate with UEs via the N1 reference point and with the RAN (e.g., NG-RAN) via the N2 reference point.
   - Network Exposure Function (NEF) with Nnef interface - acts as the entry point into operator's network, by securely exposing to AFs the network capabilities and events provided by 3GPP NFs and by providing ways for the AF to securely provide information to 3GPP network. For example, NEF provides a service that allows an AF to provision specific subscription data (e.g., expected UE behavior) for various UEs.
   - Network Repository Function (NRF) with Nnrf interface - provides service registration and discovery, enabling NFs to identify appropriate services available from other NFs.
   - Network Slice Selection Function (NSSF) with Nnssf interface - a "network slice" is a logical partition of a 5G network that provides specific network capabilities and characteristics, e.g., in support of a particular service. A network slice instance is a set of NF instances and the required network resources (e.g., compute, storage, communication) that provide the capabilities and characteristics of the network slice. The NSSF enables other NFs (e.g., AMF) to identify a network slice instance that is appropriate for a UE's desired service.
   - Authentication Server Function (AUSF) with Nausf interface - based in a user's home network (HPLMN), it performs user authentication and computes security key materials for various purposes.
   - Network Data Analytics Function (NWDAF) with Nnwdaf interface - provides network analytics information (e.g., statistical information of past events and/or predictive information) to other NFs on a network slice instance level.
   - Location Management Function (LMF) with Nlmf interface - supports various functions related to determination of UE locations, including location determination for a UE and obtaining any of the following: DL location measurements or a location estimate from the UE; UL location measurements from the NG RAN; and non-UE associated assistance data from the NG RAN.

The Unified Data Management (UDM) function supports generation of 3GPP authentication credentials, user identification handling, access authorization based on subscription data, and other subscriber-related functions. To provide this functionality, the UDM uses subscription data (including authentication data) stored in the 5GC unified data repository (UDR). In addition to the UDM, the UDR supports storage and retrieval of policy data by the PCF, as well as storage and retrieval of application data by NEF.

The NRF allows every NF to discover the services offered by other NFs, and Data Storage Functions (DSF) allow every NF to store its context. In addition, the NEF provides exposure of capabilities and events of the 5GC to AFs within and outside of the 5GC. For example, NEF provides a service that allows an AF to provision specific subscription data (e.g., expected UE behavior) for various UEs.

As mentioned above, 3GPP Rel-16 introduces a new AKMA feature that is based on 3GPP user credentials in 5G, including the IoT use case. More specifically, AKMA leverages the user's AKA credentials to bootstrap security between the UE and an AF, which allows the UE to securely exchange data with an application server. The AKMA architecture can be considered an evolution of Generic Bootstrapping Architecture (GBA) specified for 5GC in Rel-15 and is further specified in 3GPP TS 33.535 (v.16.2.0).

In addition to the NEF, AUSF, and AF shown in Figure 2 and described above, AKMA also utilizes an anchor function for authentication and key management for applications (AAnF). This function is shown in Figure 2 with Naanf interface. In general, AAnF interacts with AUSFs and maintains UE AKMA contexts to be used for subsequent bootstrapping requests, e.g., by application functions. At a high level, AAnF is similar to a bootstrapping server function (BSF) defined for Rel-15 GBA.

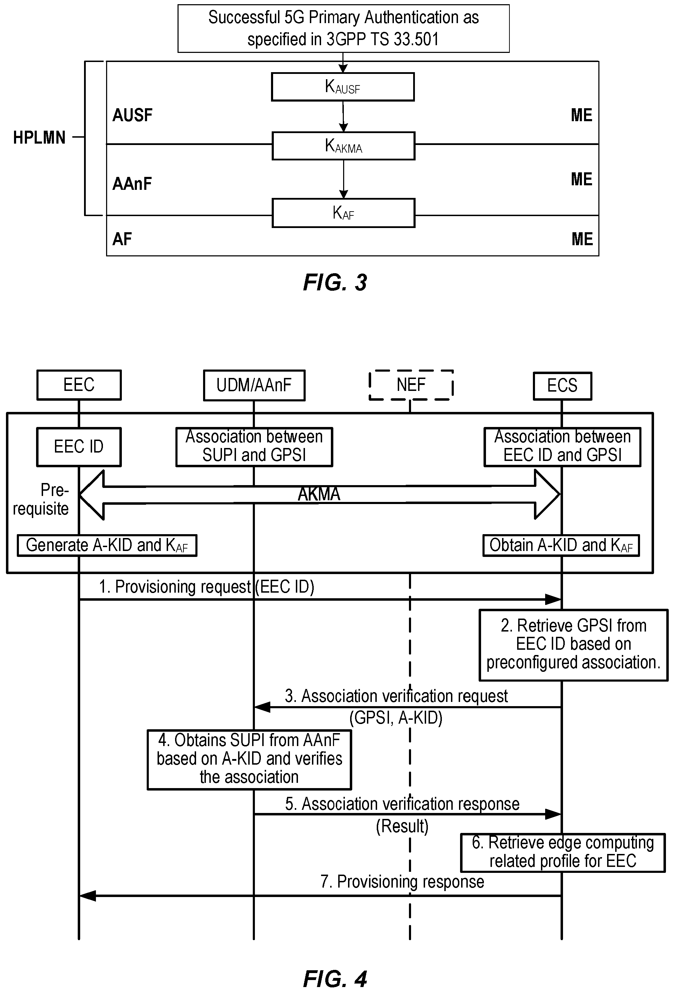

In general, AKMA reuses the result of 5G primary authentication procedure used to authenticate a UE during network registration (also referred to as "implicit bootstrapping"). In this procedure, AUSF is responsible of generation and storage of key material. In particular, the key hierarchy in AKMA includes the following, which is further illustrated in Figure 3:
- K_{AUSF} : root key, output of primary authentication procedure and stored in UE (i.e., mobile equipment, ME, part) and AUSF. Additionally, AUSF can report the result and the particular AUSF instance that generates K_{AUSF} as output of the primary authentication result in UDM, as defined in 3GPP TS 33.501.
- K_{AKMA}: anchor key derived by ME and AUSF from K_{AUSF} and used by AAnF for further AKMA key material generation. The key identifier A-KID is the AKMA Key IDentifier of K_{AKMA}. A-KID includes an AKMA Temporary UE Identifier (A-TID) and routing information related to the UE's home network (HPLMN).
- K_{AF} : application key derived by ME and AAnF from K_{AKMA} and used by UE and the Application to securely exchange application data.

When the UE wants to use AKMA, it constructs K_{AF} and A-KID and sends A-KID to the AF, which can be located in or outside of the operator's network. The AF requests the K_{AF} associated with the A-KID from the AAnF by sending the A-KID to the AAnF via NEF when the AF is located outside the operator's network or directly when the AF is located inside the operator's network. After the authentication of the AF by the operator network, the AAnF sends the corresponding K_{AF} to the AF, possibly via NEF. Thereby the shared key material K_{AF} is available in UE and AF to support the security of the communication between them.

The 3GPP Rel-17 study on "Security Aspects of Enhancement of Support for Edge Computing in 5GC" includes requirements for authentication of UE identities to Edge Computing Servers. 3GPP TS 23.558 (v1.2.0) specifies different interactions between Edge Enabler Client (EEC) and Edge Enabler Server (EES) or Edge Configuration Server (ECS) that use a UE ID for identifying the UE. The UE ID is specified in 3GPP TS 23.558 section 7.2.6, with the only example being a generic public subscription identifier (GPSI).

The EES/ECS needs to authenticate the GPSI of the UE, which is provided by the EEC that runs on the UE. One possible solution is AKMA, such as described in 3GPP TR 33.839 (v0.3.0). Figure 4 shows a signal flow diagram of an exemplary authentication/authorization procedure between an EEC and an ECS. In addition, the procedure shown in Figure 4 involves a UDM/AAnF and an NEF. Although some of the operations shown in Figure 4 are given numerical labels, these are meant to facilitate explanation and do not imply any strict temporal order of the operations, unless specifically noted otherwise.

Preconditions of the numbered operations are shown in the rectangle and include the following:
- EEC and ECS have shared A-KID and K_{AF} via AKMA (as specified in 3GPP TS 33.535).
- ECS or 5GC is configured with the edge computing related profile for EEC.
- ECS and 5GC share a UE identifier (i.e., GPSI) to identify EEC.
- ECS stores an association between EEC ID and UE identifier. This association is preconfigured in ECS by the ECS administrator.

In operation 1, the UE initiates the service provisioning procedure with EEC ID included (as further specified in 3GPP TS 23.558 section 8.3). In operation 2, ECS retrieves GPSI based on the preconfigured association with EEC ID. In operation 3, in order to prove the authenticity of the UE's GPSI, ECS sends an association check request to UDM, including the GPSI and A-KID. If ECS is located outside of 5GC, the request should be sent via NEF. In operation 4, in order to verify the association of GPSI and A-KID, UDM first contacts AUSF to obtain the corresponding SUPI of the A-KID. Afterwards, UDM verifies the association of the GPSI and A-KID based on the association between SUPI and GPSI.

In operation 5, UDM sends the association verification response back to ECS. In operation 6, upon successful verification, ECS retrieves the edge computing related profile for EEC from 5GC or from its local database. Afterwards, ECS can determine EEC's authorization based on EEC's profile. In operation 7, ECS sends a provisioning response to EEC.

In the current AKMA solution, discussed above, AAnF only returns to the AF a K_{AF} corresponding to the received A-KID. The AF cannot authenticate the identity of the UE based on A-KID associated with K_{AF}, but rather requires an authentic permanent identifier to do so.

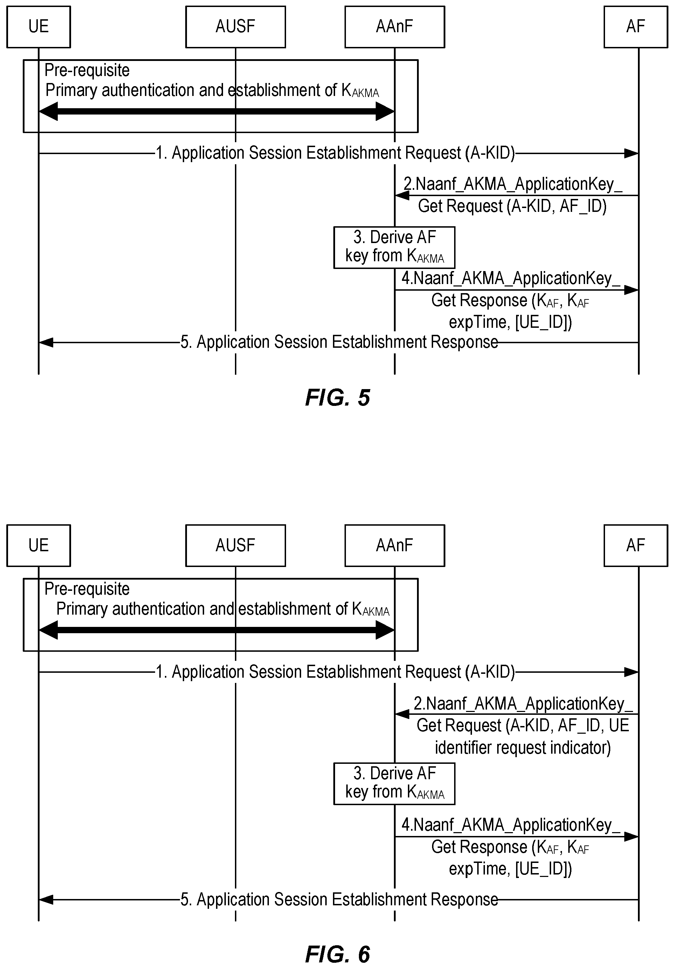

3GPP technical document S3-203191 proposes a change to the AKMA procedure to optionally allow a UE identifier to be provided to AKMA AF. According to this proposal, an AAnF can send a UE identifier (e.g., SUPI or GPSI, if available) to AF together with K_{AF}, based on AAnF local policy for the AF. Figure 5 shows a signal flow diagram of an exemplary key generation procedure according to this proposal. Although some of the operations shown in Figure 5 are given numerical labels, these are meant to facilitate explanation and do not imply any strict temporal order of the operations, unless specifically noted otherwise.

As in Figure 4, a primary authentication between UE and AAnF is a prerequisite. In operation 1, the UE sends an Application Establishment Request including the A-KID to the AF. The UE generates K_{AKMA} and A-KID from K_{AUSF} before initiating communication with the AF. The UE may derive K_{AF} before or after sending the message.

In operation 2, if the AF does not have an active context associated with the received A-KID, the AF sends an Naanf_AKMA_ApplicationKey_Get Request to AAnF, including the received A-KID and an AF identifier (AF_ID). AF ID consists of the fully qualified domain name (FQDN) of the AF and the Ua* security protocol identifier, which identifies the security protocol that the AF will use with the UE. Upon receiving this request, the AAnF checks whether it can provide the service to the AF based on the configured local policy or based on the authorization information or policy provided by the NRF using the AF ID. If unsuccessful, the AAnF shall reject the request and the procedure terminates. The AAnF verifies whether the subscriber is authorized to use AKMA based on the presence of the UE-specific K_{AKMA} identified by A-KID. If K_{AKMA} is present in AAnF, the AAnF continues with operation 3; otherwise, the AAnF skips operation 3 and performs operation 4 using an error response.

In operation 3, AAnF derives AF key (K_{AF}) from K_{AKMA} if it does not already have the requisite K_{AF}. The key derivation procedure is described in 3GPP TS 38.535 (v17.0.0) Annex A.4. In operation 4, AAnF sends an Naanf_AKMA_ApplicationKey_Get Response to AF, including K_{AF}, an expiration time for K_{AF}, and optionally a UE identifier (UE_ID). The UE identifier may be the SUPI or the GPSI (if available) of the UE as determined by the AAnF based on its local policy for the AF. In operation 5, the AF sends an Application Session Establishment Response to the UE. If the information received in operation 4 indicated failure of AKMA key request, the AF rejects the Application Session Establishment by including a failure cause. Afterwards, the UE may trigger a new Application Session Establishment request with the latest A-KID to the AKMA AF.

According to the solution proposed by S3-203191, returning the UE_ID in operation 4 is optional and the conditions for returning UE_ID are not defined. Therefore, an AF has no control over when and how authenticate the UE identity. Being unable to authenticate the UE when needed and/or offering services to unauthenticated UEs can cause various problems, issues, and/or difficulties for AFs.

Embodiments of the present disclosure address these and other problems, issues, and/or difficulties by providing novel, flexible, and efficient techniques for improving AKMA-type procedures to make UE authentication possible for AFs while having low and/or minimal complexity to existing AKMA-type procedures.

At a high level, in some embodiments, an AF can send an indicator (e.g., to AAnF or NEF) to request a UE identifier. Other embodiments include a UE identifier (e.g., GPSI) check mechanism at the AKMA AF. These embodiments are described in more detail below, using various figures for illustration. Although some of the operations shown in these figures are given numerical labels, these labels are meant to facilitate explanation and do not imply any strict temporal order of the operations, unless specifically noted otherwise.

Figure 6 shows a signal flow diagram of an exemplary key generation procedure, according to some embodiments of the present disclosure. Since many operations in Figure 6 are substantially similar to those shown in Figure 5, only the differences are described below.

In operation 2, the AF includes in the Naanf_AKMA_ApplicationKey_Get Request an indicator to request a UE identifier. In operation 3, upon receiving this indicator, the AAnF determines the UE identifier(s) to be sent (e.g., SUPI and/or GPSI) and authorizes the AF's access to the requested identifier(s) based on local policy or subscription info of the UE. If a requested GPSI is not locally available, the AAnF may fetch GPSI from another NF, e.g., from UDM via Nudm Identifier Translation service operation.

In operation 4, if the indicator to request UE Identifier was present in the request but neither SUPI nor GPSI could be sent back to the AF (e.g., access not authorized per local policy), the AAnF may include an indication that the UE identifier is not available or an error in the response. Otherwise, the AAnF returns the UE_ID as discussed above for Figure 5.

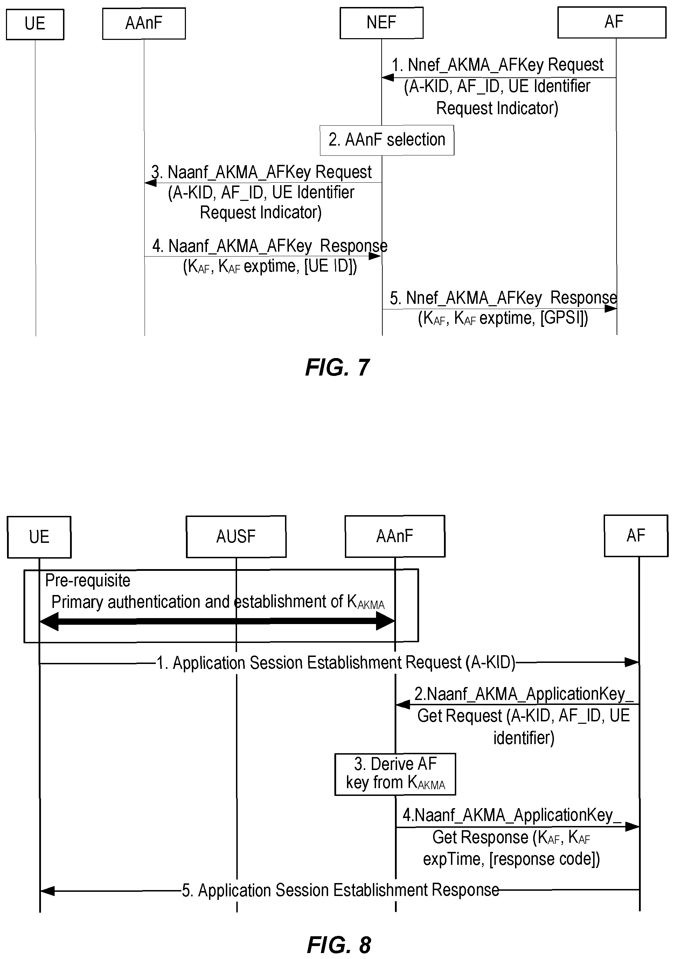

Figure 7 shows a signal flow diagram of an exemplary application key request procedure, according to some embodiments of the present disclosure. In particular, Figure 7 shows an exemplary procedure that can be used by an AF to request K_{AF} from AAnF via NEF, when the AF is located outside the operator's network.

In operation 1, when the AF is about to request an AKMA Application Key for the UE from the AAnF (e.g., when the UE initiates application session establishment request such as operation 1 in Figure 5), the AF discovers the HPLMN of the UE based on the A-KID and sends a request to the AAnF via NEF service API. The request includes the A-KID and the AF ID and an indicator to request a UE Identifier, similar to operation 2 in Figure 6.

In operation 2, if the AF is authorized by the NEF to request K_{AF}, the NEF discovers and selects an AAnF based on local configuration or via NRF in a similar manner as the AF selects an AAnF in operation 1 of Figures 5-6. In operation 3, the NEF forwards the K_{AF} request to the selected AAnF. If neither SUPI nor GPSI to fulfill the AF's request is locally available in the NEF, the NEF may include an indicator to request UE Identifier in the request.

In operation 4, the AAnF generates K_{AF} in the manner described above and sends the response to the NEF with K_{AF}, K_{AF} expiration time (K_{AF}_exptime) and, if available, GPSI or SUPI of the UE. If the indicator to request UE identifier is present in the request of operation 3 but neither SUPI or GPSI could be provided to the NEF (e.g., access not authorized per local policy), the AAnF may include in the response of operation 4 an error or an indication that the UE identifier is not available.

In operation 5, the NEF forwards the response to the AF including, if available, the GPSI or SUPI of the UE (only GPSI is shown in Figure 7 for simplicity). In some embodiments, if neither SUPI nor GPSI to fulfill the AF's request is locally available in the NEF, nor available from AAnF, the NEF may fetch GPSI from another NF, e.g., from UDM via Nudm Identifier Translation service operation. If the indicator to request UE identifier is present in the request of operation 1 but neither SUPI or GPSI could be provided to the AF, the NEF may include in the response of operation 5 an error or an indication that the UE identifier is not available.

In any of the embodiments shown in Figures 6-7, the AF can perform various other operations to check a GPSI received from AAnF (Figure 6) or NEF (Figure 7). In such embodiments, if he AF already has a locally-available UE identifier (e.g., GPSI1 through pre-provisioning or obtained from the UE), the AF can first verify (e.g., in an application protocol dependent manner) that the UE also has K_{AF} and then checks GPSI1 against the UE identifier (e.g., GPSI2) obtained from AAnF or NEF. If the AF verifies that these two UE identifiers are the same (e.g., GPSI1 = GPSI2), the UE is authenticated and the AF proceeds with its normal application-specific logic. Otherwise (e.g., GPSI1 != GPSI2), the AF consider the UE authentication a failure and may not offer an application session to the UE.

Figure 8 shows a signal flow diagram of another exemplary key generation procedure, according to other embodiments of the present disclosure. In the scenario shown in Figure 8, an AF located inside the operator's network requests AF-specific AKMA keys from the AAnF. In this scenario, the AF already has the UE identifier, which may be obtained through pre-provisioning, from the UE, or from previous interactions with the network. Since many operations in Figure 8 are substantially similar to those shown in Figure 5, only the differences are described below.

In operation 2, the AF includes the UE identifier (e.g., GPSI or SUPI) in the Naanf_AKMA_ApplicationKey_Get Request to the AAnF. In operation 3, the AAnF checks that the UE Identifier from the AF matches with the UE identity available locally, e.g., SUPI or GPSI. If GPSI is not locally available in the AAnF, the AAnF may fetch GPSI from another NF, e.g., from UDM via Nudm Identifier Translation service operation. In operation 4, the AAnF sends Naanf_AKMA_ApplicationKey_Get Response to the AF with K_{AF}, K_{AF} expiration time, and optionally a response code. If a match was determined in operation 3, this can be indicated by the response code or a lack of response code in conjunction with other provided parameters (which can implicitly indicate the match). If no match was determined in operation 3, the response code can indicate an error, lack of match, etc.

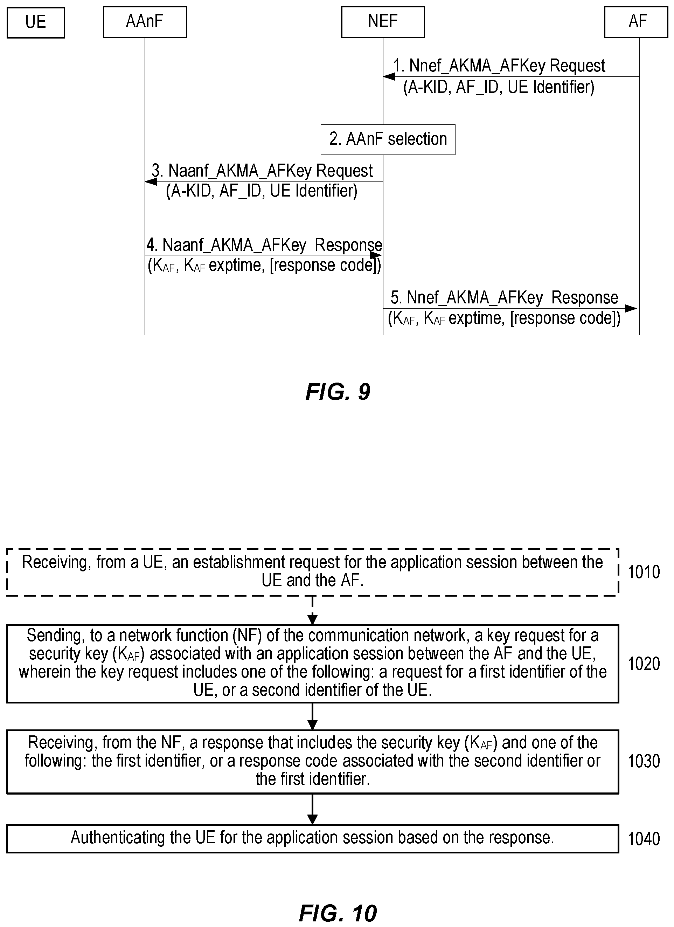

Figure 9 shows a signal flow diagram of another exemplary application key request procedure, according to some embodiments of the present disclosure. In particular, Figure 9 shows an exemplary procedure that can be used by an AF to request K_{AF} from AAnF via NEF, when the AF is located inside the operator's network. Since many operations in Figure 9 are substantially similar to those shown in Figure 7, only the differences are described below.

In operation 1, when the AF is about to request an AKMA Application Key for the UE from the AAnF, the AF sends a request to the AAnF via NEF service API. The request includes A-KID, AF ID, and a UE Identifier already available to the AF, such as described above in relation to Figure 8 operation 2. In some cases, inclusion of the UE identifier may be optional.

In operation 3, the NEF checks the UE Identifier from the AF matches with the UE identity available locally, e.g., SUPI or GPSI. If they are not matched, the NEF may send the response with an error code. If GPSI is not locally available but SUPI is available in the NEF, the NEF may fetch GPSI from another NF (e.g., UDM via Nudm Identifier Translation service operation). After AAnF selection, the NEF forwards the request to the selected AAnF and includes the UE identifier. If neither SUPI nor GPSI is locally available in the NEF (or can be fetched from UDM), the NEF may include the UE identifier received in operation 1 in the request sent in operation 3.

Any of the embodiments described above can also be applied to the edge computing use cases whereby the EEC takes on the role of the UE and the EES/ECS takes on the role of the AF. In such scenarios, AKMA can be used for the generation of a shared key K_{ECUEID} = K_{AF} between the UE and the EES/ECS. The EEC and EES/ECS can then use K_{ECUEID} for authentication of the GPSI. In order to use the shared K_{ECUEID} for authentication of the GPSI, a challenge-response protocol can be employed. For example, if HTTP is used as application protocol, HTTP Digest specified in IETF RFC 7616 can be used for this purpose.

Furthermore, based on using A-KID as a temporary identifier, GPSI can be verified based on the following operations:
1. EEC sends GPSI in addition to the A-KID to EES/ECS.
2. EES/ECS send A-KID and an indicator requesting GPSI or the GPSI obtained from EEC with the AF_ID to the AAnF via NEF or directly depending on the location of EEC/ECS.
3. AAnF fetches GPSI from UDM based on SUPI, which is part of AAnF AKMA context.
4. AAnF authorizes the AF to get GPSI or verify GPSI sent by the AF matching with the GPSI available in the network. If verification is successful, AAnF provides KAF and GPSI to EES/ECS. Otherwise, AAnF sends an appropriate failure message.
5. EES/ECS checks whether GPSI sent by EEC and GPSI received from AAnF are the same or checks a response code of UE identifier verification from the network. If the check is successful, K_{ECUEID} can be used for authentication as mentioned above.

The embodiments described above can be further illustrated with reference to Figures 10-12, which depict exemplary methods (e.g., procedures) for an AF, an NEF, and an AAnF, respectively. Put differently, various features of the operations described below correspond to various embodiments described above. The exemplary methods shown in Figures 10-12 can be complementary to each other such that they can be used cooperatively to provide benefits, advantages, and/or solutions to problems described herein. Although the exemplary methods are illustrated in Figures 10-12 by specific blocks in particular orders, the operations corresponding to the blocks can be performed in different orders than shown and can be combined and/or divided into operations having different functionality than shown. Optional blocks and/or operations are indicated by dashed lines.

More specifically, Figure 10 illustrates an exemplary method (e.g., procedure) for an application function (AF) associated with a communication network, according to various exemplary embodiments of the present disclosure. The exemplary method shown in Figure 6 can be performed by any appropriate type of AF, such as those described herein with reference to other figures.

The exemplary method can include the operations of block 1020, where the AF can send, to a network function (NF) of the communication network, a key request for a security key (K_{AF}) associated with an application session between the AF and a user equipment (UE). The key request can include a request for a first identifier of the UE (e.g., as illustrated in Figures 6-7), or a second identifier of the UE (e.g., as illustrated in Figures 8-9). The exemplary method can also include the operations of block 1030, where the AF can receive, from the NF, a response that includes the security key (K_{AF}) and one of the following: the first identifier, or a response code associated with the second identifier or the first identifier. The exemplary method can also include the operations of block 1040, where the AF can authenticate the UE for the application session based on the response.

In some embodiments, authenticating the UE for the application session (e.g., in block 1040) can be based on one of the following:
- determining a match between the second identifier in the key request and the first identifier in the response;
- the response code indicates that the second identifier matches an identifier of the UE that is stored in the communication network; or
- the key request includes the second identifier, and the response code is absent from the response.

In some embodiments, the exemplary method can also include the operations of block 1010, where the AF can receive, from the UE, an establishment request for the application session. In some of these embodiments, the second identifier can be included in the key request and one of the following applies:
- the second identifier is received in the establishment request; or
- the second identifier is locally stored at the AF.

In some of these embodiments, the second identifier can be a generic public subscription identifier (GPSI) of the UE, and the first identifier received in the response can be a GPSI stored in the communication network. In some of these embodiments, the establishment request and the key request can include an identifier (A-KID) of a security key (K_{AKMA}) associated with the UE.

In some embodiments, the key request can include an identifier of the AF (e.g., AF_ID).

In some embodiments, the AF can be part of the communication network. In such embodiments, the key request can be sent to and the response received from an anchor function for authentication and key management for applications (AAnF) in the communication network. Figures 6 and 8 show examples of such embodiments. In other embodiments, the AF can be outside of the communication network. In such embodiments, the key request can be sent to and the response received from a network exposure function (NEF) in the communication network. Figures 7 and 9 show examples of such embodiments.

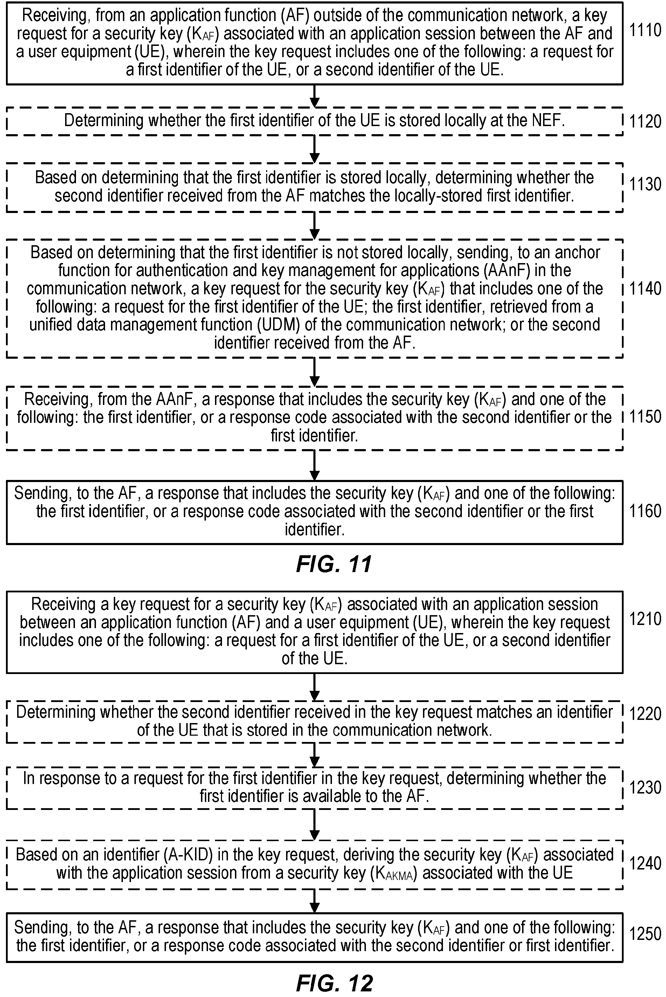

In addition, Figure 11 illustrates an exemplary method (*e*.*g*., procedure) for a network exposure function (NEF) of a communication network, according to various exemplary embodiments of the present disclosure. The exemplary method shown in Figure 11 can be performed by an NEF such as described herein with reference to other figures.

The exemplary method can include the operations of block 1110, where the NEF can receive, from an application function (AF) outside of the communication network, a key request for a security key (K_{AF}) associated with an application session between the AF and a user equipment (UE). The key request can include a request for a first identifier of the UE (e.g., as illustrated in Figure 7), or a second identifier of the UE (e.g., as illustrated in Figure 9). The exemplary method can also include the operations of block 1160, where the NEF can send, to the AF, a response that includes the security key (K_{AF}) and one of the following the first identifier, or a response code associated with the second identifier or the first identifier.

In some embodiments, the exemplary method can also include the operations of block 1120, where the NEF can determine whether the first identifier of the UE is stored locally at the NEF. In such embodiments, the exemplary method can also include the operation of block 1130, where based on determining that the first identifier of the UE is stored locally, the NEF can determine whether the second identifier received from the AF matches the locally-stored first identifier. In such case, the response code sent to the AF (e.g., in block 1160) indicates whether the second identifier received from the AF matches the locally-stored first identifier.

In some of these embodiments, the exemplary method can also include the operations of block 1140, where based on determining that the first identifier is not stored locally, the NEF can send, to an AAnF in the communication network (e.g., selected by the NEF), a key request for the security key (K_{AF}) that includes one of the following:
- a request for the first identifier of the UE,
- the first identifier, retrieved from a unified data management function (UDM) of the communication network, or
- the second identifier received from the AF.
In such embodiments, the exemplary method can also include the operations of block 1150, where the NEF can receive, from the AAnF, a response that includes the security key (K_{AF}) and one of the following: the first identifier (e.g., as illustrated in Figure 7) or a response code associated with the second identifier or the first identifier (e.g., as illustrated in Figure 9). In some embodiments, the information received in block 1150 can be forwarded to the AF in block 1160.

In some of these embodiments, the response code can indicate one of the following matches an identifier of the UE that is stored in the AAnF:
- the first identifier, when it is included in the key request to the AAnF; or
- the second identifier, when it is included in the key request to the AAnF.
In other of these embodiments, the response code can indicate that the first identifier is unavailable to the AF, e.g., due to lack of access privileges.

In some embodiments, the second identifier in the key request (e.g., in block 1110) can be a generic public subscription identifier (GPSI) of the UE, and the response sent to the AF (E.g., in block 1160) can include one of the following: a GPSI stored in the communication network, or a response code indicating that the second identifier matches a GPSI stored in the communication network.

In some embodiments, when the key request (e.g., in block 1110) includes the second identifier, an absence of the response code in the response (e.g., in block 1160) indicates that the second identifier matches an identifier of the UE stored in the communication network.

In some embodiments, the key request can include an identifier (A-KID) of a security key (K_{AKMA}) associated with the UE.

In addition, Figure 12 illustrates an exemplary method (*e*.*g*., procedure) an anchor function for an authentication and key management for applications (AAnF) in a communication network, according to various exemplary embodiments of the present disclosure. The exemplary method shown in Figure 12 can be performed by an AAnF such as described herein with reference to other figures.

The exemplary method can include the operations of block 1210, where the AAnF can receive a key request for a security key (K_{AF}) associated with an application session between an application function (AF) and a user equipment (UE). The key request can include a request for a first identifier of the UE (e.g., as illustrated in Figures 6-7), or a second identifier of the UE (e.g., as illustrated in Figures 8-9). The exemplary method can also include the operations of block 1250, where the AAnF can send, to the AF, a response that includes the security key (K_{AF}) and one of the following: the first identifier, or a response code associated with the second identifier or the first identifier. In some embodiments, the second identifier can be a generic public subscription identifier (GPSI) of the UE.

In some embodiments, the exemplary method can also include the operations of block 1220, where the AAnF can determine whether the second identifier received in the key request matches an identifier of the UE that is stored in the communication network. In such case, the response code sent to the AF (e.g., in block 1250) can indicate whether the second identifier received in the key request matches the first identifier stored in the communication network.

In some embodiments, when the key request (e.g., in block 1210) includes the second identifier, an absence of the response code in the response (e.g., in block 1250) indicates that the second identifier matches an identifier of the UE stored in the communication network.

In some embodiments, the exemplary method can also include the operations of block 1230, where in response to a request for the first identifier in the key request, the AAnF can determine whether the first identifier is available to the AF. In such case, the response code sent to the AF (e.g., in block 1250) can indicate whether the first identifier is available to the AF.

In some embodiments, the key request includes an identifier (A-KID) of a security key (K_{AKMA}) associated with the UE. In such embodiments, the exemplary method can also include the operations of block 1240, where the AAnF can, based on the identifier (A-KID), derive the security key (K_{AF}) associated with the application session from the security key (K_{AKMA}) associated with the UE.

In some embodiments, the key request (e.g., in block 1210) can include an identifier of the AF (e.g., AF_ID).

In some embodiments, the AF can be part of the communication network. In such embodiments, the key request can be received from and the sent to the AF. Figures 6 and 8 show examples of such embodiments. In other embodiments, the AF can be outside of the communication network. In such embodiments, the key request can be received from and the response sent to a network exposure function (NEF) in the communication network. Figures 7 and 9 show examples of such embodiments.

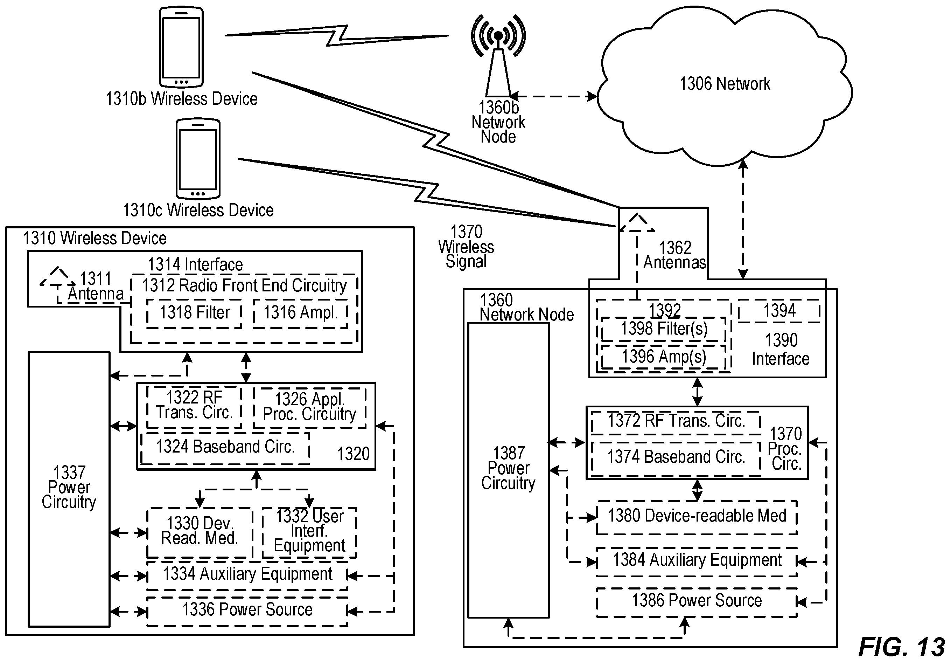

Although the subject matter described herein can be implemented in any appropriate type of system using any suitable components, the embodiments disclosed herein are described in relation to a wireless network, such as the example wireless network illustrated in Figure 13. For simplicity, the wireless network of Figure 13 only depicts network 1306, network nodes 1360 and 1360b, and WDs 1310, 1310b, and 1310c. In practice, a wireless network can further include any additional elements suitable to support communication between wireless devices or between a wireless device and another communication device, such as a landline telephone, a service provider, or any other network node or end device. Of the illustrated components, network node 1360 and wireless device (WD) 1310 are depicted with additional detail. The wireless network can provide communication and other types of services to one or more wireless devices to facilitate the wireless devices' access to and/or use of the services provided by, or via, the wireless network.

The wireless network can comprise and/or interface with any type of communication, telecommunication, data, cellular, and/or radio network or other similar type of system. In some embodiments, the wireless network can be configured to operate according to specific standards or other types of predefined rules or procedures. Thus, particular embodiments of the wireless network can implement communication standards, such as Global System for Mobile Communications (GSM), Universal Mobile Telecommunications System (UMTS), Long Term Evolution (LTE), and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards.

Network 1306 can comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices.

Network node 1360 and WD 1310 comprise various components described in more detail below. These components work together in order to provide network node and/or wireless device functionality, such as providing wireless connections in a wireless network. In different embodiments, the wireless network can comprise any number of wired or wireless networks, network nodes, base stations, controllers, wireless devices, relay stations, and/or any other components or systems that can facilitate or participate in the communication of data and/or signals whether via wired or wireless connections.

Examples of network nodes include, but are not limited to, access points (APs) (*e*.*g*., radio access points), base stations (BSs) (*e.g*., radio base stations, Node Bs, evolved Node Bs (eNBs) and NR NodeBs (gNBs)). Base stations can be categorized based on the amount of coverage they provide (or, stated differently, their transmit power level) and can then also be referred to as femto base stations, pico base stations, micro base stations, or macro base stations. A base station can be a relay node or a relay donor node controlling a relay. A network node can also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station can also be referred to as nodes in a distributed antenna system (DAS).

Further examples of network nodes include multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (*e.g*., MSCs, MMEs), O&M nodes, OSS nodes, SON nodes, positioning nodes (*e*.*g*., E-SMLCs), and/or MDTs. As another example, a network node can be a virtual network node as described in more detail below. More generally, however, network nodes can represent any suitable device (or group of devices) capable, configured, arranged, and/or operable to enable and/or provide a wireless device with access to the wireless network or to provide some service to a wireless device that has accessed the wireless network.

In Figure 13, network node 1360 includes processing circuitry 1370, device readable medium 1380, interface 1390, auxiliary equipment 1384, power source 1386, power circuitry 1387, and antenna 1362. Although network node 1360 illustrated in the example wireless network of Figure 13 can represent a device that includes the illustrated combination of hardware components, other embodiments can comprise network nodes with different combinations of components. It is to be understood that a network node comprises any suitable combination of hardware and/or software needed to perform the tasks, features, functions and methods and/or procedures disclosed herein. Moreover, while the components of network node 1360 are depicted as single boxes located within a larger box, or nested within multiple boxes, in practice, a network node can comprise multiple different physical components that make up a single illustrated component (*e*.*g*., device readable medium 1380 can comprise multiple separate hard drives as well as multiple RAM modules).

Similarly, network node 1360 can be composed of multiple physically separate components (e.g., a NodeB component and an RNC component, or a BTS component and a BSC component, *etc*.), which can each have their own respective components. In certain scenarios in which network node 1360 comprises multiple separate components (*e*.*g*., BTS and BSC components), one or more of the separate components can be shared among several network nodes. For example, a single RNC can control multiple NodeB's. In such a scenario, each unique NodeB and RNC pair, can in some instances be considered a single separate network node. In some embodiments, network node 1360 can be configured to support multiple radio access technologies (RATs). In such embodiments, some components can be duplicated (*e*.*g*., separate device readable medium 1380 for the different RATs) and some components can be reused (*e.g*., the same antenna 1362 can be shared by the RATs). Network node 1360 can also include multiple sets of the various illustrated components for different wireless technologies integrated into network node 1360, such as, for example, GSM, WCDMA, LTE, NR, WiFi, or Bluetooth wireless technologies. These wireless technologies can be integrated into the same or different chip or set of chips and other components within network node 1360.

Processing circuitry 1370 can be configured to perform any determining, calculating, or similar operations (*e*.*g*., certain obtaining operations) described herein as being provided by a network node. These operations performed by processing circuitry 1370 can include processing information obtained by processing circuitry 1370 by, for example, converting the obtained information into other information, comparing the obtained information or converted information to information stored in the network node, and/or performing one or more operations based on the obtained information or converted information, and as a result of said processing making a determination.

Processing circuitry 1370 can comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide various functionality of network node 1360, either alone or in conjunction with other network node 1360 components (e.g., device readable medium 1380). Such functionality can include any of the various wireless features, functions, or benefits discussed herein.

For example, processing circuitry 1370 can execute instructions stored in device readable medium 1380 or in memory within processing circuitry 1370. In some embodiments, processing circuitry 1370 can include a system on a chip (SOC). As a more specific example, instructions (also referred to as a computer program product) stored in medium 1380 can include instructions that, when executed by processing circuitry 1370, can configure network node 1360 to perform operations corresponding to various exemplary methods (e.g., procedures) described herein.

In some embodiments, processing circuitry 1370 can include one or more of radio frequency (RF) transceiver circuitry 1372 and baseband processing circuitry 1374. In some embodiments, radio frequency (RF) transceiver circuitry 1372 and baseband processing circuitry 1374 can be on separate chips (or sets of chips), boards, or units, such as radio units and digital units. In alternative embodiments, part or all of RF transceiver circuitry 1372 and baseband processing circuitry 1374 can be on the same chip or set of chips, boards, or units.

In certain embodiments, some or all of the functionality described herein as being provided by a network node, base station, eNB or other such network device can be performed by processing circuitry 1370 executing instructions stored on device readable medium 1380 or memory within processing circuitry 1370. In alternative embodiments, some or all of the functionality can be provided by processing circuitry 1370 without executing instructions stored on a separate or discrete device readable medium, such as in a hard-wired manner. In any of those embodiments, whether executing instructions stored on a device readable storage medium or not, processing circuitry 1370 can be configured to perform the described functionality. The benefits provided by such functionality are not limited to processing circuitry 1370 alone or to other components of network node 1360 but are enjoyed by network node 1360 as a whole, and/or by end users and the wireless network generally.

Device readable medium 1380 can comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that can be used by processing circuitry 1370. Device readable medium 1380 can store any suitable instructions, data or information, including a computer program, software, an application including one or more of logic, rules, code, tables, *etc.* and/or other instructions capable of being executed by processing circuitry 1370 and, utilized by network node 1360. Device readable medium 1380 can be used to store any calculations made by processing circuitry 1370 and/or any data received via interface 1390. In some embodiments, processing circuitry 1370 and device readable medium 1380 can be considered to be integrated.

Interface 1390 is used in the wired or wireless communication of signaling and/or data between network node 1360, network 1306, and/or WDs 1310. As illustrated, interface 1390 comprises port(s)/terminal(s) 1394 to send and receive data, for example to and from network 1306 over a wired connection. Interface 1390 also includes radio front end circuitry 1392 that can be coupled to, or in certain embodiments a part of, antenna 1362. Radio front end circuitry 1392 comprises filters 1398 and amplifiers 1396. Radio front end circuitry 1392 can be connected to antenna 1362 and processing circuitry 1370. Radio front end circuitry can be configured to condition signals communicated between antenna 1362 and processing circuitry 1370. Radio front end circuitry 1392 can receive digital data that is to be sent out to other network nodes or WDs via a wireless connection. Radio front end circuitry 1392 can convert the digital data into a radio signal having the appropriate channel and bandwidth parameters using a combination of filters 1398 and/or amplifiers 1396. The radio signal can then be transmitted via antenna 1362. Similarly, when receiving data, antenna 1362 can collect radio signals which are then converted into digital data by radio front end circuitry 1392. The digital data can be passed to processing circuitry 1370. In other embodiments, the interface can comprise different components and/or different combinations of components.

In certain alternative embodiments, network node 1360 may not include separate radio front end circuitry 1392, instead, processing circuitry 1370 can comprise radio front end circuitry and can be connected to antenna 1362 without separate radio front end circuitry 1392. Similarly, in some embodiments, all or some of RF transceiver circuitry 1372 can be considered a part of interface 1390. In still other embodiments, interface 1390 can include one or more ports or terminals 1394, radio front end circuitry 1392, and RF transceiver circuitry 1372, as part of a radio unit (not shown), and interface 1390 can communicate with baseband processing circuitry 1374, which is part of a digital unit (not shown).

Antenna 1362 can include one or more antennas, or antenna arrays, configured to send and/or receive wireless signals. Antenna 1362 can be coupled to radio front end circuitry 1390 and can be any type of antenna capable of transmitting and receiving data and/or signals wirelessly. In some embodiments, antenna 1362 can comprise one or more omni-directional, sector or panel antennas operable to transmit/receive radio signals between, for example, 2 GHz and 66 GHz. An omni-directional antenna can be used to transmit/receive radio signals in any direction, a sector antenna can be used to transmit/receive radio signals from devices within a particular area, and a panel antenna can be a line of sight antenna used to transmit/receive radio signals in a relatively straight line. In some instances, the use of more than one antenna can be referred to as MIMO. In certain embodiments, antenna 1362 can be separate from network node 1360 and can be connectable to network node 1360 through an interface or port.

Antenna 1362, interface 1390, and/or processing circuitry 1370 can be configured to perform any receiving operations and/or certain obtaining operations described herein as being performed by a network node. Any information, data and/or signals can be received from a wireless device, another network node and/or any other network equipment. Similarly, antenna 1362, interface 1390, and/or processing circuitry 1370 can be configured to perform any transmitting operations described herein as being performed by a network node. Any information, data and/or signals can be transmitted to a wireless device, another network node and/or any other network equipment.

Power circuitry 1387 can comprise, or be coupled to, power management circuitry and can be configured to supply the components of network node 1360 with power for performing the functionality described herein. Power circuitry 1387 can receive power from power source 1386. Power source 1386 and/or power circuitry 1387 can be configured to provide power to the various components of network node 1360 in a form suitable for the respective components (e.g., at a voltage and current level needed for each respective component). Power source 1386 can either be included in, or external to, power circuitry 1387 and/or network node 1360. For example, network node 1360 can be connectable to an external power source (*e.g*., an electricity outlet) via an input circuitry or interface such as an electrical cable, whereby the external power source supplies power to power circuitry 1387. As a further example, power source 1386 can comprise a source of power in the form of a battery or battery pack which is connected to, or integrated in, power circuitry 1387. The battery can provide backup power should the external power source fail. Other types of power sources, such as photovoltaic devices, can also be used.

Alternative embodiments of network node 1360 can include additional components beyond those shown in Figure 13 that can be responsible for providing certain aspects of the network node's functionality, including any of the functionality described herein and/or any functionality necessary to support the subject matter described herein. For example, network node 1360 can include user interface equipment to allow and/or facilitate input of information into network node 1360 and to allow and/or facilitate output of information from network node 1360. This can allow and/or facilitate a user to perform diagnostic, maintenance, repair, and other administrative functions for network node 1360.

Furthermore, various network functions (NFs, e.g., UDM, AAnF, NEF, AF, etc.) described herein can be implemented with and/or hosted by different variants of network node 1360, including those variants described above.

In some embodiments, a wireless device (WD, *e.g.,* WD 1310) can be configured to transmit and/or receive information without direct human interaction. For instance, a WD can be designed to transmit information to a network on a predetermined schedule, when triggered by an internal or external event, or in response to requests from the network. Examples of a WD include, but are not limited to, smart phones, mobile phones, cell phones, voice over IP (VoIP) phones, wireless local loop phones, desktop computers, personal digital assistants (PDAs), wireless cameras, gaming consoles or devices, music storage devices, playback appliances, wearable devices, wireless endpoints, mobile stations, tablets, laptops, laptop-embedded equipment (LEE), laptop-mounted equipment (LME), smart devices, wireless customer-premise equipment (CPE), mobile-type communication (MTC) devices, Internet-of-Things (IoT) devices, vehicle-mounted wireless terminal devices, *etc.*

A WD can support device-to-device (D2D) communication, for example by implementing a 3GPP standard for sidelink communication, vehicle-to-vehicle (V2V), vehicle-to-infrastructure (V2I), vehicle-to-everything (V2X) and can in this case be referred to as a D2D communication device. As yet another specific example, in an Internet of Things (IoT) scenario, a WD can represent a machine or other device that performs monitoring and/or measurements and transmits the results of such monitoring and/or measurements to another WD and/or a network node. The WD can in this case be a machine-to-machine (M2M) device, which can in a 3GPP context be referred to as an MTC device. As one particular example, the WD can be a UE implementing the 3GPP narrow band internet of things (NB-IoT) standard. Particular examples of such machines or devices are sensors, metering devices such as power meters, industrial machinery, or home or personal appliances (*e.g*., refrigerators, televisions, *etc*.) personal wearables (*e.g*., watches, fitness trackers, *etc*.). In other scenarios, a WD can represent a vehicle or other equipment that is capable of monitoring and/or reporting on its operational status or other functions associated with its operation. A WD as described above can represent the endpoint of a wireless connection, in which case the device can be referred to as a wireless terminal. Furthermore, a WD as described above can be mobile, in which case it can also be referred to as a mobile device or a mobile terminal.

As illustrated, wireless device 1310 includes antenna 1311, interface 1314, processing circuitry 1320, device readable medium 1330, user interface equipment 1332, auxiliary equipment 1334, power source 1336 and power circuitry 1337. WD 1310 can include multiple sets of one or more of the illustrated components for different wireless technologies supported by WD 1310, such as, for example, GSM, WCDMA, LTE, NR, WiFi, WiMAX, or Bluetooth wireless technologies, just to mention a few. These wireless technologies can be integrated into the same or different chips or set of chips as other components within WD 1310.

Antenna 1311 can include one or more antennas or antenna arrays, configured to send and/or receive wireless signals, and is connected to interface 1314. In certain alternative embodiments, antenna 1311 can be separate from WD 1310 and be connectable to WD 1310 through an interface or port. Antenna 1311, interface 1314, and/or processing circuitry 1320 can be configured to perform any receiving or transmitting operations described herein as being performed by a WD. Any information, data and/or signals can be received from a network node and/or another WD. In some embodiments, radio front end circuitry and/or antenna 1311 can be considered an interface.

As illustrated, interface 1314 comprises radio front end circuitry 1312 and antenna 1311. Radio front end circuitry 1312 comprise one or more filters 1318 and amplifiers 1316. Radio front end circuitry 1314 is connected to antenna 1311 and processing circuitry 1320 and can be configured to condition signals communicated between antenna 1311 and processing circuitry 1320. Radio front end circuitry 1312 can be coupled to or a part of antenna 1311. In some embodiments, WD 1310 may not include separate radio front end circuitry 1312; rather, processing circuitry 1320 can comprise radio front end circuitry and can be connected to antenna 1311. Similarly, in some embodiments, some or all of RF transceiver circuitry 1322 can be considered a part of interface 1314. Radio front end circuitry 1312 can receive digital data that is to be sent out to other network nodes or WDs via a wireless connection. Radio front end circuitry 1312 can convert the digital data into a radio signal having the appropriate channel and bandwidth parameters using a combination of filters 1318 and/or amplifiers 1316. The radio signal can then be transmitted via antenna 1311. Similarly, when receiving data, antenna 1311 can collect radio signals which are then converted into digital data by radio front end circuitry 1312. The digital data can be passed to processing circuitry 1320. In other embodiments, the interface can comprise different components and/or different combinations of components.

Processing circuitry 1320 can comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide WD 1310 functionality either alone or in combination with other WD 1310 components, such as device readable medium 1330. Such functionality can include any of the various wireless features or benefits discussed herein.

For example, processing circuitry 1320 can execute instructions stored in device readable medium 1330 or in memory within processing circuitry 1320 to provide the functionality disclosed herein. More specifically, instructions (also referred to as a computer program product) stored in medium 1330 can include instructions that, when executed by processor 1320, can configure wireless device 1310 to perform operations corresponding to various exemplary methods (e.g., procedures) described herein.

As illustrated, processing circuitry 1320 includes one or more of RF transceiver circuitry 1322, baseband processing circuitry 1324, and application processing circuitry 1326. In other embodiments, the processing circuitry can comprise different components and/or different combinations of components. In certain embodiments processing circuitry 1320 of WD 1310 can comprise a SOC. In some embodiments, RF transceiver circuitry 1322, baseband processing circuitry 1324, and application processing circuitry 1326 can be on separate chips or sets of chips. In alternative embodiments, part or all of baseband processing circuitry 1324 and application processing circuitry 1326 can be combined into one chip or set of chips, and RF transceiver circuitry 1322 can be on a separate chip or set of chips. In still alternative embodiments, part or all of RF transceiver circuitry 1322 and baseband processing circuitry 1324 can be on the same chip or set of chips, and application processing circuitry 1326 can be on a separate chip or set of chips. In yet other alternative embodiments, part or all of RF transceiver circuitry 1322, baseband processing circuitry 1324, and application processing circuitry 1326 can be combined in the same chip or set of chips. In some embodiments, RF transceiver circuitry 1322 can be a part of interface 1314. RF transceiver circuitry 1322 can condition RF signals for processing circuitry 1320.

In certain embodiments, some or all of the functionality described herein as being performed by a WD can be provided by processing circuitry 1320 executing instructions stored on device readable medium 1330, which in certain embodiments can be a computer-readable storage medium. In alternative embodiments, some or all of the functionality can be provided by processing circuitry 1320 without executing instructions stored on a separate or discrete device readable storage medium, such as in a hard-wired manner. In any of those particular embodiments, whether executing instructions stored on a device readable storage medium or not, processing circuitry 1320 can be configured to perform the described functionality. The benefits provided by such functionality are not limited to processing circuitry 1320 alone or to other components of WD 1310, but are enjoyed by WD 1310 as a whole, and/or by end users and the wireless network generally.

Processing circuitry 1320 can be configured to perform any determining, calculating, or similar operations (e.g., certain obtaining operations) described herein as being performed by a WD. These operations, as performed by processing circuitry 1320, can include processing information obtained by processing circuitry 1320 by, for example, converting the obtained information into other information, comparing the obtained information or converted information to information stored by WD 1310, and/or performing one or more operations based on the obtained information or converted information, and as a result of said processing making a determination.

Device readable medium 1330 can be operable to store a computer program, software, an application including one or more of logic, rules, code, tables, *etc.* and/or other instructions capable of being executed by processing circuitry 1320. Device readable medium 1330 can include computer memory (*e*.*g*., Random Access Memory (RAM) or Read Only Memory (ROM)), mass storage media (*e.g*., a hard disk), removable storage media (*e.g*., a Compact Disk (CD) or a Digital Video Disk (DVD)), and/or any other volatile or non-volatile, non-transitory device readable and/or computer executable memory devices that store information, data, and/or instructions that can be used by processing circuitry 1320. In some embodiments, processing circuitry 1320 and device readable medium 1330 can be considered to be integrated.

User interface equipment 1332 can include components that allow and/or facilitate a human user to interact with WD 1310. Such interaction can be of many forms, such as visual, audial, tactile, *etc.* User interface equipment 1332 can be operable to produce output to the user and to allow and/or facilitate the user to provide input to WD 1310. The type of interaction can vary depending on the type of user interface equipment 1332 installed in WD 1310. For example, if WD 1310 is a smart phone, the interaction can be via a touch screen; if WD 1310 is a smart meter, the interaction can be through a screen that provides usage (*e.g*., the number of gallons used) or a speaker that provides an audible alert (*e.g.,* if smoke is detected). User interface equipment 1332 can include input interfaces, devices and circuits, and output interfaces, devices and circuits. User interface equipment 1332 can be configured to allow and/or facilitate input of information into WD 1310 and is connected to processing circuitry 1320 to allow and/or facilitate processing circuitry 1320 to process the input information. User interface equipment 1332 can include, for example, a microphone, a proximity or other sensor, keys/buttons, a touch display, one or more cameras, a USB port, or other input circuitry. User interface equipment 1332 is also configured to allow and/or facilitate output of information from WD 1310, and to allow and/or facilitate processing circuitry 1320 to output information from WD 1310. User interface equipment 1332 can include, for example, a speaker, a display, vibrating circuitry, a USB port, a headphone interface, or other output circuitry. Using one or more input and output interfaces, devices, and circuits, of user interface equipment 1332, WD 1310 can communicate with end users and/or the wireless network and allow and/or facilitate them to benefit from the functionality described herein.

Auxiliary equipment 1334 is operable to provide more specific functionality which may not be generally performed by WDs. This can comprise specialized sensors for doing measurements for various purposes, interfaces for additional types of communication such as wired communications *etc.* The inclusion and type of components of auxiliary equipment 1334 can vary depending on the embodiment and/or scenario.

Power source 1336 can, in some embodiments, be in the form of a battery or battery pack. Other types of power sources, such as an external power source (*e.g.,* an electricity outlet), photovoltaic devices or power cells, can also be used. WD 1310 can further comprise power circuitry 1337 for delivering power from power source 1336 to the various parts of WD 1310 which need power from power source 1336 to carry out any functionality described or indicated herein. Power circuitry 1337 can in certain embodiments comprise power management circuitry. Power circuitry 1337 can additionally or alternatively be operable to receive power from an external power source; in which case WD 1310 can be connectable to the external power source (such as an electricity outlet) via input circuitry or an interface such as an electrical power cable. Power circuitry 1337 can also in certain embodiments be operable to deliver power from an external power source to power source 1336. This can be, for example, for the charging of power source 1336. Power circuitry 1337 can perform any converting or other modification to the power from power source 1336 to make it suitable for supply to the respective components of WD 1310.

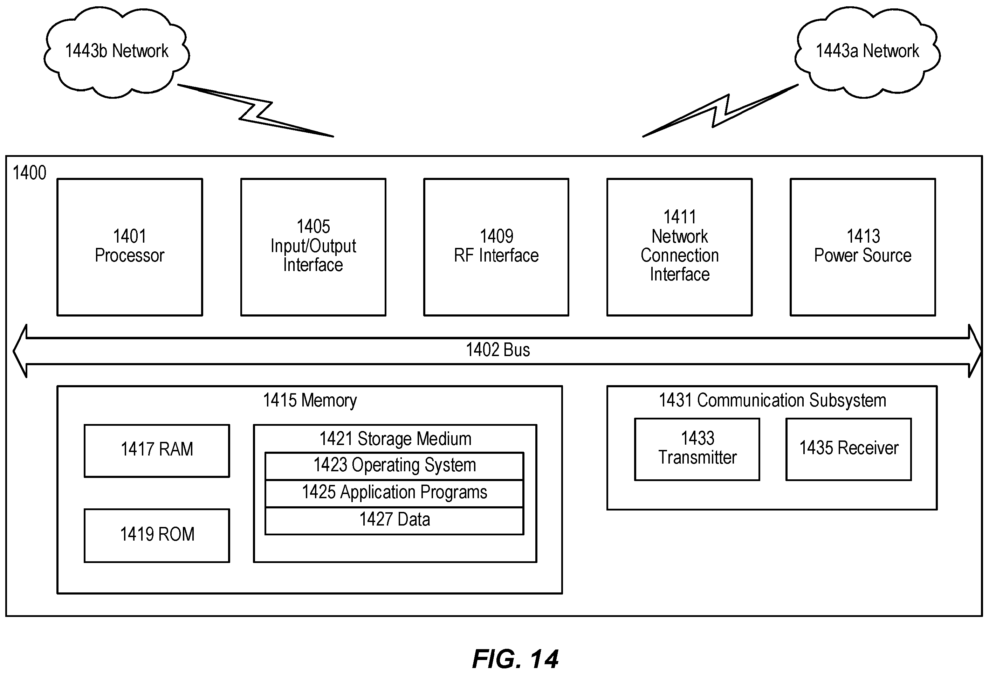

Figure 14 illustrates one embodiment of a UE in accordance with various aspects described herein. As used herein, a user equipment or UE may not necessarily have a user in the sense of a human user who owns and/or operates the relevant device. Instead, a UE can represent a device that is intended for sale to, or operation by, a human user but which may not, or which may not initially, be associated with a specific human user (*e.g.,* a smart sprinkler controller). Alternatively, a UE can represent a device that is not intended for sale to, or operation by, an end user but which can be associated with or operated for the benefit of a user (*e.g.,* a smart power meter). UE 1400 can be any UE identified by the 3^{rd} Generation Partnership Project (3GPP), including a NB-IoT UE, a machine type communication (MTC) UE, and/or an enhanced MTC (eMTC) UE. UE 1400, as illustrated in Figure 14, is one example of a WD configured for communication in accordance with one or more communication standards promulgated by the 3^{rd} Generation Partnership Project (3GPP), such as 3GPP's GSM, UMTS, LTE, and/or 5G standards. As mentioned previously, the term WD and UE can be used interchangeable. Accordingly, although Figure 14 is a UE, the components discussed herein are equally applicable to a WD, and vice-versa.

In Figure 14, UE 1400 includes processing circuitry 1401 that is operatively coupled to input/output interface 1405, radio frequency (RF) interface 1409, network connection interface 1411, memory 1415 including random access memory (RAM) 1417, read-only memory (ROM) 1419, and storage medium 1421 or the like, communication subsystem 1431, power source 1433, and/or any other component, or any combination thereof. Storage medium 1421 includes operating system 1423, application program 1425, and data 1427. In other embodiments, storage medium 1421 can include other similar types of information. Certain UEs can utilize all of the components shown in Figure 14, or only a subset of the components. The level of integration between the components can vary from one UE to another UE. Further, certain UEs can contain multiple instances of a component, such as multiple processors, memories, transceivers, transmitters, receivers, *etc.*

In Figure 14, processing circuitry 1401 can be configured to process computer instructions and data. Processing circuitry 1401 can be configured to implement any sequential state machine operative to execute machine instructions stored as machine-readable computer programs in the memory, such as one or more hardware-implemented state machines (*e.g*., in discrete logic, FPGA, ASIC, *etc*.); programmable logic together with appropriate firmware; one or more stored program, general-purpose processors, such as a microprocessor or Digital Signal Processor (DSP), together with appropriate software; or any combination of the above. For example, the processing circuitry 1401 can include two central processing units (CPUs). Data can be information in a form suitable for use by a computer.

In the depicted embodiment, input/output interface 1405 can be configured to provide a communication interface to an input device, output device, or input and output device. UE 1400 can be configured to use an output device via input/output interface 1405. An output device can use the same type of interface port as an input device. For example, a USB port can be used to provide input to and output from UE 1400. The output device can be a speaker, a sound card, a video card, a display, a monitor, a printer, an actuator, an emitter, a smartcard, another output device, or any combination thereof. UE 1400 can be configured to use an input device via input/output interface 1405 to allow and/or facilitate a user to capture information into UE 1400. The input device can include a touch-sensitive or presence-sensitive display, a camera (*e.g*., a digital camera, a digital video camera, a web camera, *etc*.)*,* a microphone, a sensor, a mouse, a trackball, a directional pad, a trackpad, a scroll wheel, a smartcard, and the like. The presence-sensitive display can include a capacitive or resistive touch sensor to sense input from a user. A sensor can be, for instance, an accelerometer, a gyroscope, a tilt sensor, a force sensor, a magnetometer, an optical sensor, a proximity sensor, another like sensor, or any combination thereof. For example, the input device can be an accelerometer, a magnetometer, a digital camera, a microphone, and an optical sensor.

In Figure 14, RF interface 1409 can be configured to provide a communication interface to RF components such as a transmitter, a receiver, and an antenna. Network connection interface 1411 can be configured to provide a communication interface to network 1443a. Network 1443a can encompass wired and/or wireless networks such as a local-area network (LAN), a wide-area network (WAN), a computer network, a wireless network, a telecommunications network, another like network or any combination thereof. For example, network 1443a can comprise a Wi-Fi network. Network connection interface 1411 can be configured to include a receiver and a transmitter interface used to communicate with one or more other devices over a communication network according to one or more communication protocols, such as Ethernet, TCP/IP, SONET, ATM, or the like. Network connection interface 1411 can implement receiver and transmitter functionality appropriate to the communication network links (*e*.*g*., optical, electrical, and the like). The transmitter and receiver functions can share circuit components, software or firmware, or alternatively can be implemented separately.

RAM 1417 can be configured to interface via bus 1402 to processing circuitry 1401 to provide storage or caching of data or computer instructions during the execution of software programs such as the operating system, application programs, and device drivers. ROM 1419 can be configured to provide computer instructions or data to processing circuitry 1401. For example, ROM 1419 can be configured to store invariant low-level system code or data for basic system functions such as basic input and output (I/O), startup, or reception of keystrokes from a keyboard that are stored in a non-volatile memory. Storage medium 1421 can be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives.

In one example, storage medium 1421 can be configured to include operating system 1423; application program 1425 such as a web browser application, a widget or gadget engine or another application; and data file 1427. Storage medium 1421 can store, for use by UE 1400, any of a variety of various operating systems or combinations of operating systems. For example, application program 1425 can include executable program instructions (also referred to as a computer program product) that, when executed by processor 1401, can configure UE 1400 to perform operations corresponding to various exemplary methods (*e.g*., procedures) described herein.

Storage medium 1421 can be configured to include a number of physical drive units, such as redundant array of independent disks (RAID), floppy disk drive, flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as a subscriber identity module or a removable user identity (SIM/RUIM) module, other memory, or any combination thereof. Storage medium 1421 can allow and/or facilitate UE 1400 to access computer-executable instructions, application programs or the like, stored on transitory or non-transitory memory media, to off-load data, or to upload data. An article of manufacture, such as one utilizing a communication system can be tangibly embodied in storage medium 1421, which can comprise a device readable medium.

In Figure 14, processing circuitry 1401 can be configured to communicate with network 1443b using communication subsystem 1431. Network 1443a and network 1443b can be the same network or networks or different network or networks. Communication subsystem 1431 can be configured to include one or more transceivers used to communicate with network 1443b. For example, communication subsystem 1431 can be configured to include one or more transceivers used to communicate with one or more remote transceivers of another device capable of wireless communication such as another WD, UE, or base station of a radio access network (RAN) according to one or more communication protocols, such as IEEE 802.14, CDMA, WCDMA, GSM, LTE, UTRAN, WiMax, or the like. Each transceiver can include transmitter 1433 and/or receiver 1435 to implement transmitter or receiver functionality, respectively, appropriate to the RAN links (*e*.*g*., frequency allocations and the like). Further, transmitter 1433 and receiver 1435 of each transceiver can share circuit components, software or firmware, or alternatively can be implemented separately.

In the illustrated embodiment, the communication functions of communication subsystem 1431 can include data communication, voice communication, multimedia communication, short-range communications such as Bluetooth, near-field communication, location-based communication such as the use of the global positioning system (GPS) to determine a location, another like communication function, or any combination thereof. For example, communication subsystem 1431 can include cellular communication, Wi-Fi communication, Bluetooth communication, and GPS communication. Network 1443b can encompass wired and/or wireless networks such as a local-area network (LAN), a wide-area network (WAN), a computer network, a wireless network, a telecommunications network, another like network or any combination thereof. For example, network 1443b can be a cellular network, a Wi-Fi network, and/or a near-field network. Power source 1413 can be configured to provide alternating current (AC) or direct current (DC) power to components of UE 1400.

The features, benefits and/or functions described herein can be implemented in one of the components of UE 1400 or partitioned across multiple components of UE 1400. Further, the features, benefits, and/or functions described herein can be implemented in any combination of hardware, software or firmware. In one example, communication subsystem 1431 can be configured to include any of the components described herein. Further, processing circuitry 1401 can be configured to communicate with any of such components over bus 1402. In another example, any of such components can be represented by program instructions stored in memory that when executed by processing circuitry 1401 perform the corresponding functions described herein. In another example, the functionality of any of such components can be partitioned between processing circuitry 1401 and communication subsystem 1431. In another example, the non-computationally intensive functions of any of such components can be implemented in software or firmware and the computationally intensive functions can be implemented in hardware.

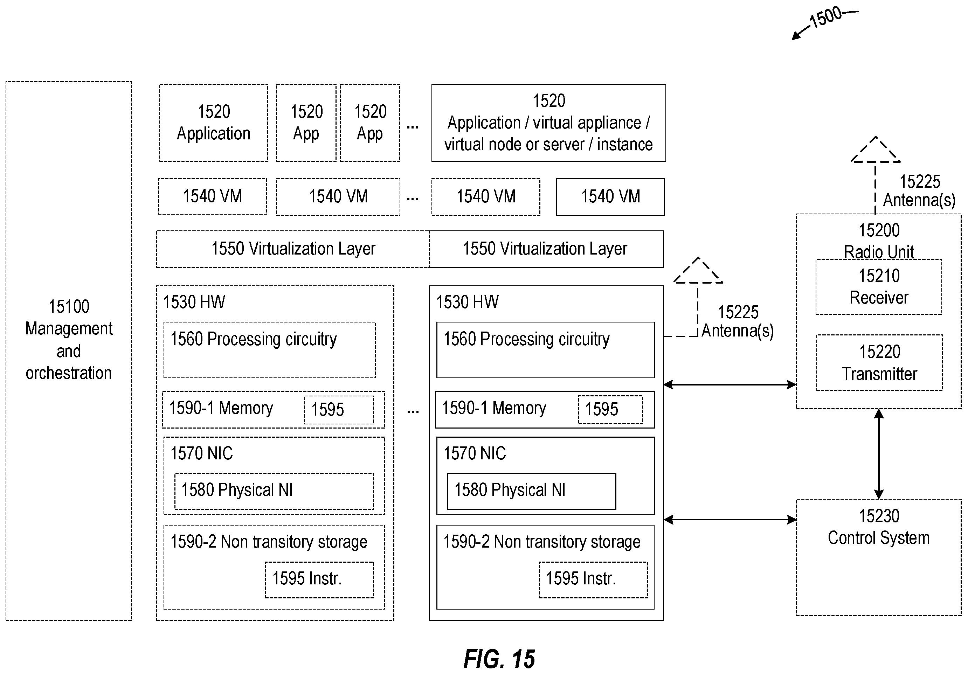

Figure 15 is a schematic block diagram illustrating a virtualization environment 1500 in which functions implemented by some embodiments can be virtualized. In the present context, virtualizing means creating virtual versions of apparatuses or devices which can include virtualizing hardware platforms, storage devices and networking resources. As used herein, virtualization can be applied to a node (*e.g.,* a virtualized base station or a virtualized radio access node) or to a device (*e.g*., a UE, a wireless device or any other type of communication device) or components thereof and relates to an implementation in which at least a portion of the functionality is implemented as one or more virtual components (*e*.*g*., via one or more applications, components, functions, virtual machines or containers executing on one or more physical processing nodes in one or more networks).

In some embodiments, some or all of the functions described herein can be implemented as virtual components executed by one or more virtual machines implemented in one or more virtual environments 1500 hosted by one or more of hardware nodes 1530. Further, in embodiments in which the virtual node is not a radio access node or does not require radio connectivity (*e*.*g*., a core network node), then the network node can be entirely virtualized.

The functions can be implemented by one or more applications 1520 (which can alternatively be called software instances, virtual appliances, network functions, virtual nodes, virtual network functions, *etc*.) operative to implement some of the features, functions, and/or benefits of some of the embodiments disclosed herein. Applications 1520 are run in virtualization environment 1500 which provides hardware 1530 comprising processing circuitry 1560 and memory 1590. Memory 1590 contains instructions 1595 executable by processing circuitry 1560 whereby application 1520 is operative to provide one or more of the features, benefits, and/or functions disclosed herein.

Virtualization environment 1500 can include general-purpose or special-purpose network hardware devices (or nodes) 1530 comprising a set of one or more processors or processing circuitry 1560, which can be commercial off-the-shelf (COTS) processors, dedicated Application Specific Integrated Circuits (ASICs), or any other type of processing circuitry including digital or analog hardware components or special purpose processors. Each hardware device can comprise memory 1590-1 which can be non-persistent memory for temporarily storing instructions 1595 or software executed by processing circuitry 1560. For example, instructions 1595 can include program instructions (also referred to as a computer program product) that, when executed by processing circuitry 1560, can configure hardware node 1520 to perform operations corresponding to various exemplary methods (*e*.*g*., procedures) described herein. Such operations can also be attributed to virtual node(s) 1520 that is/are hosted by hardware node 1530.

Each hardware device can comprise one or more network interface controllers (NICs) 1570, also known as network interface cards, which include physical network interface 1580. Each hardware device can also include non-transitory, persistent, machine-readable storage media 1590-2 having stored therein software 1595 and/or instructions executable by processing circuitry 1560. Software 1595 can include any type of software including software for instantiating one or more virtualization layers 1550 (also referred to as hypervisors), software to execute virtual machines 1540 as well as software allowing it to execute functions, features and/or benefits described in relation with some embodiments described herein.

Virtual machines 1540, comprise virtual processing, virtual memory, virtual networking or interface and virtual storage, and can be run by a corresponding virtualization layer 1550 or hypervisor. Different embodiments of the instance of virtual appliance 1520 can be implemented on one or more of virtual machines 1540, and the implementations can be made in different ways.

During operation, processing circuitry 1560 executes software 1595 to instantiate the hypervisor or virtualization layer 1550, which can sometimes be referred to as a virtual machine monitor (VMM). Virtualization layer 1550 can present a virtual operating platform that appears like networking hardware to virtual machine 1540.

As shown in Figure 15, hardware 1530 can be a standalone network node with generic or specific components. Hardware 1530 can comprise antenna 15225 and can implement some functions via virtualization. Alternatively, hardware 1530 can be part of a larger cluster of hardware (*e*.*g*., such as in a data center or customer premise equipment (CPE)) where many hardware nodes work together and are managed via management and orchestration (MANO) 15100, which, among others, oversees lifecycle management of applications 1520.

Virtualization of the hardware is in some contexts referred to as network function virtualization (NFV). NFV can be used to consolidate many network equipment types onto industry standard high-volume server hardware, physical switches, and physical storage, which can be located in data centers, and customer premise equipment.

In the context of NFV, virtual machine 1540 can be a software implementation of a physical machine that runs programs as if they were executing on a physical, non-virtualized machine. Each of virtual machines 1540, and that part of hardware 1530 that executes that virtual machine, be it hardware dedicated to that virtual machine and/or hardware shared by that virtual machine with others of the virtual machines 1540, forms a separate virtual network elements (VNE).

Still in the context of NFV, Virtual Network Function (VNF) is responsible for handling specific network functions that run in one or more virtual machines 1540 on top of hardware networking infrastructure 1530 and corresponds to application 1520 in Figure 15.

In some embodiments, one or more radio units 15200 that each include one or more transmitters 15220 and one or more receivers 15210 can be coupled to one or more antennas 15225. Radio units 15200 can communicate directly with hardware nodes 1530 via one or more appropriate network interfaces and can be used in combination with the virtual components to provide a virtual node with radio capabilities, such as a radio access node or a base station. Nodes arranged in this manner can also communicate with one or more UEs, such as described elsewhere herein.

In some embodiments, some signaling can be performed via control system 15230, which can alternatively be used for communication between the hardware nodes 1530 and radio units 15200.

Furthermore, various network functions (NFs, e.g., UDM, AAnF, NEF, AF, etc.) described herein can be implemented with and/or hosted by different variants of hardware 1530, including those variants described above.

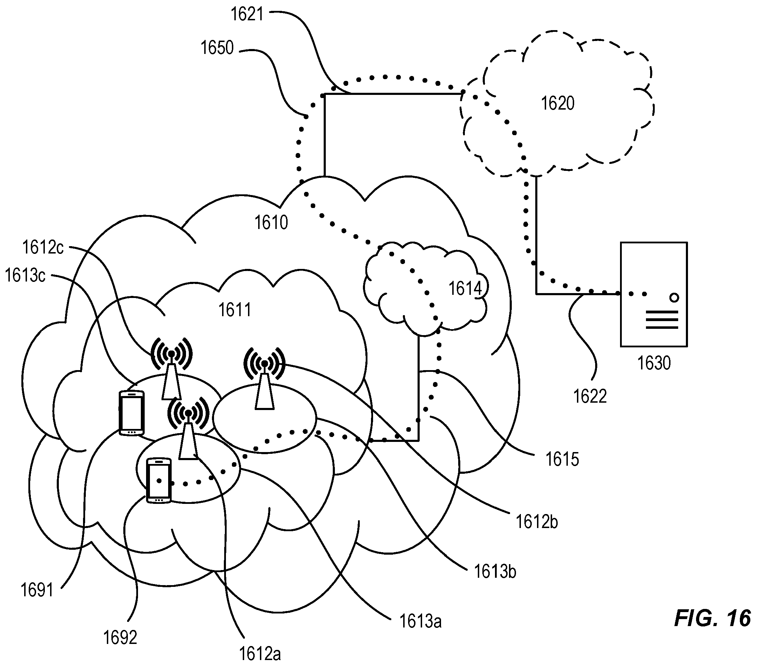

With reference to Figure 16, in accordance with an embodiment, a communication system includes telecommunication network 1610, such as a 3GPP-type cellular network, which comprises access network 1611, such as a radio access network, and core network 1614. Access network 1611 comprises a plurality of base stations 1612a, 1612b, 1612c, such as NBs, eNBs, gNBs or other types of wireless access points, each defining a corresponding coverage area 1613a, 1613b, 1613c. Each base station 1612a, 1612b, 1612c is connectable to core network 1614 over a wired or wireless connection 1615. A first UE 1691 located in coverage area 1613c can be configured to wirelessly connect to, or be paged by, the corresponding base station 1612c. A second UE 1692 in coverage area 1613a is wirelessly connectable to the corresponding base station 1612a. While a plurality of UEs 1691, 1692 are illustrated in this example, the disclosed embodiments are equally applicable to a situation where a sole UE is in the coverage area or where a sole UE is connecting to the

Telecommunication network 1610 is itself connected to host computer 1630, which can be embodied in the hardware and/or software of a standalone server, a cloud-implemented server, a distributed server or as processing resources in a server farm. Host computer 1630 can be under the ownership or control of a service provider or can be operated by the service provider or on behalf of the service provider. Connections 1621 and 1622 between telecommunication network 1610 and host computer 1630 can extend directly from core network 1614 to host computer 1630 or can go via an optional intermediate network 1620. Intermediate network 1620 can be one of, or a combination of more than one of, a public, private or hosted network; intermediate network 1620, if any, can be a backbone network or the Internet; in particular, intermediate network 1620 can comprise two or more sub-networks (not shown).

The communication system of Figure 16 as a whole enables connectivity between the connected UEs 1691, 1692 and host computer 1630. The connectivity can be described as an over-the-top (OTT) connection 1650. Host computer 1630 and the connected UEs 1691, 1692 are configured to communicate data and/or signaling via OTT connection 1650, using access network 1611, core network 1614, any intermediate network 1620 and possible further infrastructure (not shown) as intermediaries. OTT connection 1650 can be transparent in the sense that the participating communication devices through which OTT connection 1650 passes are unaware of routing of uplink and downlink communications. For example, base station 1612 may not or need not be informed about the past routing of an incoming downlink communication with data originating from host computer 1630 to be forwarded (e.g., handed over) to a connected UE 1691. Similarly, base station 1612 need not be aware of the future routing of an outgoing uplink communication originating from the UE 1691 towards the host computer 1630.

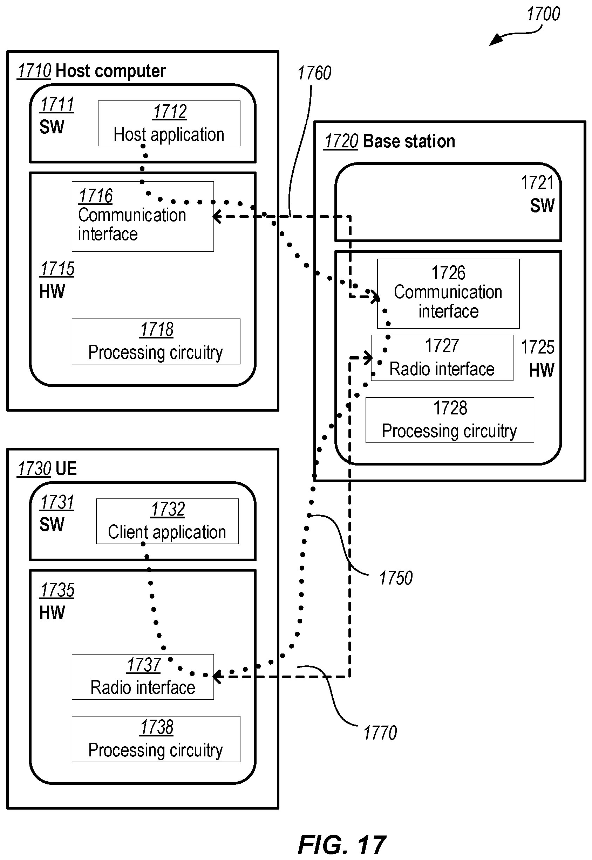

Example implementations, in accordance with an embodiment, of the UE, base station and host computer discussed in the preceding paragraphs will now be described with reference to Figure 17. In communication system 1700, host computer 1710 comprises hardware 1715 including communication interface 1716 configured to set up and maintain a wired or wireless connection with an interface of a different communication device of communication system 1700. Host computer 1710 further comprises processing circuitry 1718, which can have storage and/or processing capabilities. In particular, processing circuitry 1718 can comprise one or more programmable processors, application-specific integrated circuits, field programmable gate arrays or combinations of these (not shown) adapted to execute instructions. Host computer 1710 further comprises software 1711, which is stored in or accessible by host computer 1710 and executable by processing circuitry 1718. Software 1711 includes host application 1712. Host application 1712 can be operable to provide a service to a remote user, such as UE 1730 connecting via OTT connection 1750 terminating at UE 1730 and host computer 1710. In providing the service to the remote user, host application 1712 can provide user data which is transmitted using OTT connection 1750.

Communication system 1700 can also include base station 1720 provided in a telecommunication system and comprising hardware 1725 enabling it to communicate with host computer 1710 and with UE 1730. Hardware 1725 can include communication interface 1726 for setting up and maintaining a wired or wireless connection with an interface of a different communication device of communication system 1700, as well as radio interface 1727 for setting up and maintaining at least wireless connection 1770 with UE 1730 located in a coverage area (not shown in Figure 17) served by base station 1720. Communication interface 1726 can be configured to facilitate connection 1760 to host computer 1710. Connection 1760 can be direct, or it can pass through a core network (not shown in Figure 17) of the telecommunication system and/or through one or more intermediate networks outside the telecommunication system. In the embodiment shown, hardware 1725 of base station 1720 can also include processing circuitry 1728, which can comprise one or more programmable processors, application-specific integrated circuits, field programmable gate arrays or combinations of these (not shown) adapted to execute instructions.

Base station 1720 also includes software 1721 stored internally or accessible via an external connection. For example, software 1721 can include program instructions (also referred to as a computer program product) that, when executed by processing circuitry 1728, can configure base station 1720 to perform operations corresponding to various exemplary methods (e.g., procedures) described herein.

Communication system 1700 can also include UE 1730 already referred to, whose hardware 1735 can include radio interface 1737 configured to set up and maintain wireless connection 1770 with a base station serving a coverage area in which UE 1730 is currently located. Hardware 1735 of UE 1730 can also include processing circuitry 1738, which can comprise one or more programmable processors, application-specific integrated circuits, field programmable gate arrays or combinations of these (not shown) adapted to execute instructions.

UE 1730 also includes software 1731, which is stored in or accessible by UE 1730 and executable by processing circuitry 1738. Software 1731 includes client application 1732. Client application 1732 can be operable to provide a service to a human or non-human user via UE 1730, with the support of host computer 1710. In host computer 1710, an executing host application 1712 can communicate with the executing client application 1732 via OTT connection 1750 terminating at UE 1730 and host computer 1710. In providing the service to the user, client application 1732 can receive request data from host application 1712 and provide user data in response to the request data. OTT connection 1750 can transfer both the request data and the user data. Client application 1732 can interact with the user to generate the user data that it provides. Software 1731 can also include program instructions (also referred to as a computer program product) that, when executed by processing circuitry 1738, can configure UE 1730 to perform operations corresponding to various exemplary methods (*e*.*g*., procedures) described herein.

As an example, host computer 1710, base station 1720 and UE 1730 illustrated in Figure 17 can be similar or identical to host computer 1630, one of base stations 1612a-c and one of UEs 1691-1692 of Figure 16, respectively. This is to say, the inner workings of these entities can be as shown in Figure 17 and independently, the surrounding network topology can be that shown in Figure 16.

In Figure 17, OTT connection 1750 has been drawn abstractly to illustrate the communication between host computer 1710 and UE 1730 via base station 1720, without explicit reference to any intermediary devices and the precise routing of messages via these devices. Network infrastructure can determine the routing, which it can be configured to hide from UE 1730 or from the service provider operating host computer 1710, or both. While OTT connection 1750 is active, the network infrastructure can further take decisions by which it dynamically changes the routing (*e.g*., on the basis of load balancing consideration or reconfiguration of the network).

Wireless connection 1770 between UE 1730 and base station 1720 is in accordance with the teachings of the embodiments described throughout this disclosure. One or more of the various embodiments improve the performance of OTT services provided to UE 1730 using OTT connection 1750, in which wireless connection 1770 forms the last segment. More precisely, the exemplary embodiments disclosed herein can improve flexibility for the network to monitor end-to-end quality-of-service (QoS) of data flows, including their corresponding radio bearers, associated with data sessions between a user equipment (UE) and another entity, such as an OTT data application or service external to the 5G network. These and other advantages can facilitate more timely design, implementation, and deployment of 5G/NR solutions. Furthermore, such embodiments can facilitate flexible and timely control of data session QoS, which can lead to improvements in capacity, throughput, latency, *etc.* that are envisioned by 5G/NR and important for the growth of OTT services.

A measurement procedure can be provided for the purpose of monitoring data rate, latency and other network operational aspects on which the one or more embodiments improve. There can further be an optional network functionality for reconfiguring OTT connection 1750 between host computer 1710 and UE 1730, in response to variations in the measurement results. The measurement procedure and/or the network functionality for reconfiguring OTT connection 1750 can be implemented in software 1711 and hardware 1715 of host computer 1710 or in software 1731 and hardware 1735 of UE 1730, or both. In embodiments, sensors (not shown) can be deployed in or in association with communication devices through which OTT connection 1750 passes; the sensors can participate in the measurement procedure by supplying values of the monitored quantities exemplified above, or supplying values of other physical quantities from which software 1711, 1731 can compute or estimate the monitored quantities. The reconfiguring of OTT connection 1750 can include message format, retransmission settings, preferred routing *etc*.; the reconfiguring need not affect base station 1720, and it can be unknown or imperceptible to base station 1720. Such procedures and functionalities can be known and practiced in the art. In certain embodiments, measurements can involve proprietary UE signaling facilitating host computer 1710's measurements of throughput, propagation times, latency and the like. The measurements can be implemented in that software 1711 and 1731 causes messages to be transmitted, in particular empty or 'dummy' messages, using OTT connection 1750 while it monitors propagation times, errors, *etc.*

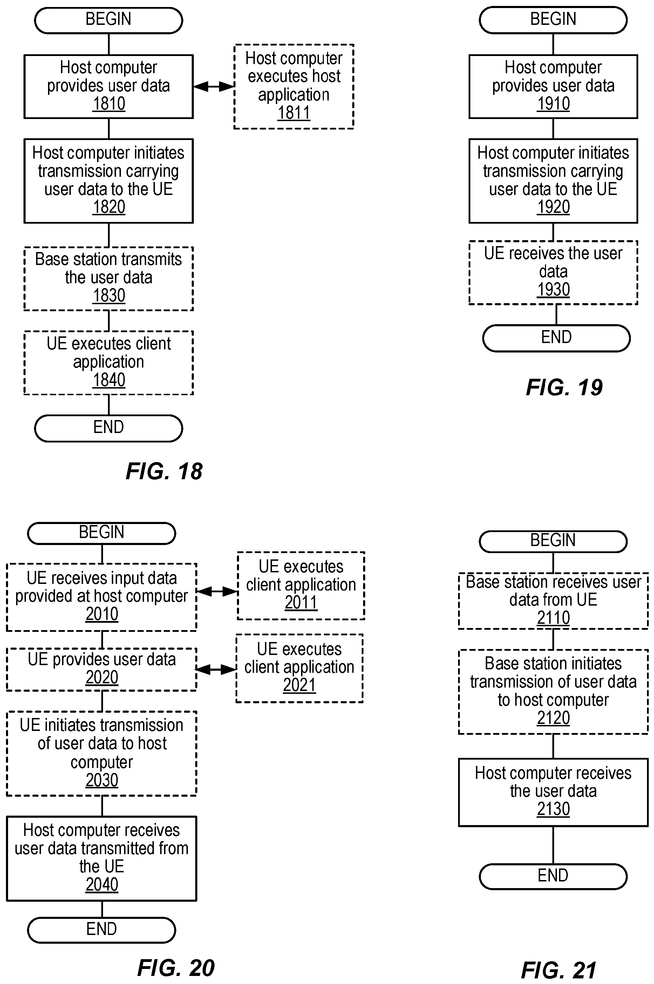

Figure 18 is a flowchart illustrating an exemplary method and/or procedure implemented in a communication system, in accordance with one embodiment. The communication system includes a host computer, a base station and a UE which, in some exemplary embodiments, can be those described with reference to other figures herein. For simplicity of the present disclosure, only drawing references to Figure 18 will be included in this section. In step 1810, the host computer provides user data. In substep 1811 (which can be optional) of step 1810, the host computer provides the user data by executing a host application. In step 1820, the host computer initiates a transmission carrying the user data to the UE. In step 1830 (which can be optional), the base station transmits to the UE the user data which was carried in the transmission that the host computer initiated, in accordance with the teachings of the embodiments described throughout this disclosure. In step 1840 (which can also be optional), the UE executes a client application associated with the host application executed by the host computer.

Figure 19 is a flowchart illustrating an exemplary method and/or procedure implemented in a communication system, in accordance with one embodiment. The communication system includes a host computer, a base station and a UE which can be those described with reference to other figures herein. For simplicity of the present disclosure, only drawing references to Figure 19 will be included in this section. In step 1910 of the method, the host computer provides user data. In an optional substep (not shown) the host computer provides the user data by executing a host application. In step 1920, the host computer initiates a transmission carrying the user data to the UE. The transmission can pass via the base station, in accordance with the teachings of the embodiments described throughout this disclosure. In step 1930 (which can be optional), the UE receives the user data carried in the transmission.

Figure 20 is a flowchart illustrating an exemplary method and/or procedure implemented in a communication system, in accordance with one embodiment. The communication system includes a host computer, a base station and a UE which can be those described with reference to other figures herein. For simplicity of the present disclosure, only drawing references to Figure 20 will be included in this section. In step 2010 (which can be optional), the UE receives input data provided by the host computer. Additionally or alternatively, in step 2020, the UE provides user data. In substep 2021 (which can be optional) of step 2020, the UE provides the user data by executing a client application. In substep 2011 (which can be optional) of step 2010, the UE executes a client application which provides the user data in reaction to the received input data provided by the host computer. In providing the user data, the executed client application can further consider user input received from the user. Regardless of the specific manner in which the user data was provided, the UE initiates, in substep 2030 (which can be optional), transmission of the user data to the host computer. In step 2040 of the method, the host computer receives the user data transmitted from the UE, in accordance with the teachings of the embodiments described throughout this disclosure.

Figure 21 is a flowchart illustrating an exemplary method and/or procedure implemented in a communication system, in accordance with one embodiment. The communication system includes a host computer, a base station and a UE which can be those described with reference to other figures herein. For simplicity of the present disclosure, only drawing references to Figure 21 will be included in this section. In step 2110 (which can be optional), in accordance with the teachings of the embodiments described throughout this disclosure, the base station receives user data from the UE. In step 2120 (which can be optional), the base station initiates transmission of the received user data to the host computer. In step 2130 (which can be optional), the host computer receives the user data carried in the transmission initiated by the base station.

As described herein, device and/or apparatus can be represented by a semiconductor chip, a chipset, or a (hardware) module comprising such chip or chipset; this, however, does not exclude the possibility that a functionality of a device or apparatus, instead of being hardware implemented, be implemented as a software module such as a computer program or a computer program product comprising executable software code portions for execution or being run on a processor. Furthermore, functionality of a device or apparatus can be implemented by any combination of hardware and software. A device or apparatus can also be regarded as an assembly of multiple devices and/or apparatuses, whether functionally in cooperation with or independently of each other. Moreover, devices and apparatuses can be implemented in a distributed fashion throughout a system, so long as the functionality of the device or apparatus is preserved. Such and similar principles are considered as known to a skilled person.

Furthermore, functions described herein as being performed by a wireless device or a network node may be distributed over a plurality of wireless devices and/or network nodes. In other words, it is contemplated that the functions of the network node and wireless device described herein are not limited to performance by a single physical device and, in fact, can be distributed among several physical devices.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

In addition, certain terms used in the present disclosure, including the specification, drawings and exemplary embodiments thereof, can be used synonymously in certain instances, including, but not limited to, *e.g.,* data and information. It should be understood that, while these words and/or other words that can be synonymous to one another, can be used synonymously herein, that there can be instances when such words can be intended to not be used synonymously.

The foregoing merely illustrates the principles of the disclosure. Various modifications and alterations to the described embodiments will be apparent to those skilled in the art in view of the teachings herein.

## Claims

1. A method performed by an application function, AF, associated with a communication network, the method comprising:
sending (1020), to a network function, NF, of the communication network, a key request for a security key, K_{AF}, associated with an application session between the AF and a user equipment, UE, wherein the key request includes a request for a first identifier of the UE and an identifier, A-KID, of a security key, K_{AKMA}, associated with the UE, from which the security key associated with the application session is derivable;
receiving (1030), from the NF, a response that includes the security key associated with the application session and the first identifier; and
authenticating (1040) the UE for the application session based on the response.

2. The method of claim 1, further comprising receiving, from the UE, an establishment request for the application session.

3. The method of claim 2, wherein the establishment request includes the identifier of the security key associated with the UE.

4. The method of any of claims 1-3, wherein the key request includes an identifier of the AF.

5. The method of any of claims 1-4, wherein:
the AF is part of the communication network and the key request is sent to, and the response received from an anchor function for authentication and key management for applications (AAnF) in the communication network; or
the AF is outside of the communication network and the key request is sent to, and the response received from, a network exposure function, NEF, in the communication network.

6. A method performed by a network exposure function, NEF, of a communication network, the method comprising:
receiving (1110), from an application function, AF, outside of the communication network, a key request for a security key, K_{AF}, associated with an application session between the AF and a user equipment, UE, wherein the key request includes
a request for a first identifier of the UE and an identifier, A-KID, of a security key, K_{AKMA}, associated with the UE, from which the security key associated with the application session is derivable; and
sending (1160), to the AF, a response that includes the security key associated with the application session and the first identifier.

7. The method of claim 6, further comprising determining (1120) whether the first identifier of the UE is stored locally at the NEF.

8. The method of any of claims 6-7, further comprising:
based on determining that the first identifier is not stored locally, sending (1140), to the AAnF in the communication network, a key request for the security key associated with the application session, wherein the key request includes:
a request for the first identifier of the UE; and the identifier of the security key associated with the UE; and
receiving (1150), from the AAnF, a response that includes the security key associated with the application session and
the first identifier.

9. A method performed by an anchor function for authentication and key management for applications, AAnF, in a communication network, the method comprising:
receiving (1210) a key request for a security key, K_{AF}, associated with an application session between an application function, AF, and a user equipment, UE, wherein the key request includes a request for a first identifier of the UE and an identifier, A-KID, of a security key, K_{AKMA}, associated with the UE;
deriving (1240), from the security key associated with the UE, the security key associated with the application session; and
sending (1250), to the AF, a response that includes the security key associated with the application session and the first identifier.

10. The method of claim 9, wherein the first identifier is a generic public subscription identifier, GPSI, or a subscription permanent identifier, SUPI.

11. The method of any of claims 9-10, wherein the key request includes an identifier of the AF.

12. The method of any of claims 9-11, wherein:
the application function, AF, is outside of the communication network and the key request is received from, and the response sent to, a network exposure function, NEF, in the communication network; or
the key request is received from, and the response sent to, the AF, which is in the communication network.

13. An application function, AF, associated with a communication network, the AF being configured to perform operations corresponding to any of the methods of claims 1-5.

14. A network exposure function, NEF, of a communication network, the NEF being configured to perform operations corresponding to any of the methods of claims 6-8.

15. An anchor function for authentication and key management for applications, AAnF, in a communication network, the AAnF being configured to perform operations corresponding to any of the methods of claims 9-12.

## Patentansprüche

1. Verfahren, das von einer Anwendungsfunktion, AF, durchgeführt wird, die einem Kommunikationsnetz zugeordnet ist, wobei das Verfahren umfasst
Senden (1020) einer Schlüsselanforderung für einen Sicherheitsschlüssel, K_{AF}, an eine Netzfunktion, NF, des Kommunikationsnetzes, der einer Anwendungssitzung zwischen der AF und einer Benutzereinrichtung, UE, zugeordnet ist, wobei die Schlüsselanforderung eine Anforderung einer ersten Kennung der UE und einer Kennung, A-KID, eines Sicherheitsschlüssels, K_{AKMA}, beinhaltet, der der UE zugeordnet ist, von dem der der Anwendungssitzung zugeordnete Sicherheitsschlüssel ableitbar ist;
Empfangen (1030) einer Antwort von der NF, die den der Anwendungssitzung zugeordneten Sicherheitsschlüssel und die erste Kennung beinhaltet; und
Authentifizieren (1040) der UE für die Anwendungssitzung auf Grundlage der Antwort.

2. Verfahren nach Anspruch 1, ferner umfassend das Empfangen einer Einrichtungsanforderung für die Anwendungssitzung von der UE.

3. Verfahren nach Anspruch 2, wobei die Einrichtungsanforderung die Kennung des der UE zugeordneten Sicherheitsschlüssels beinhaltet.

4. Verfahren nach einem der Ansprüche 1 bis 3, wobei die Schlüsselanforderung eine Kennung der AF beinhaltet.

5. Verfahren nach einem der Ansprüche 1 bis 4, wobei:
die AF Teil des Kommunikationsnetzes ist und die Schlüsselanforderung an eine Ankerfunktion für Authentifizierung und Schlüsselverwaltung für Anwendungen (AAnF) im Kommunikationsnetz gesendet und die Antwort von dieser empfangen wird; oder
die AF außerhalb des Kommunikationsnetzes ist und die Schlüsselanforderung an eine Netzexpositionsfunktion, NEF, im Kommunikationsnetz gesendet und die Antwort von dieser empfangen wird.

6. Verfahren, das von einer Netzexpositionsfunktion, NEF, eines Kommunikationsnetzes durchgeführt wird, wobei das Verfahren umfasst:
Empfangen (1110) einer Schlüsselanforderung für einen Sicherheitsschlüssel, K_{AF}, von einer Anwendungsfunktion, AF, außerhalb des Kommunikationsnetzes, der einer Anwendungssitzung zwischen der AF und einer Benutzereinrichtung, UE, zugeordnet ist, wobei die Schlüsselanforderung
eine Anforderung einer ersten Kennung der UE und einer Kennung, A-KID, eines Sicherheitsschlüssels, K_{AKMA} beinhaltet, der der UE zugeordnet ist, von dem der der Anwendungssitzung zugeordnete Sicherheitsschlüssel ableitbar ist; und
Senden (1160) einer Antwort an die AF, die den der Anwendungssitzung zugeordneten Sicherheitsschlüssel und die erste Kennung beinhaltet.

7. Verfahren nach Anspruch 6, ferner umfassend das Bestimmen (1120), ob die erste Kennung der UE lokal auf der NEF gespeichert ist.

8. Verfahren nach einem der Ansprüche 6 bis 7, ferner umfassend: basierend auf dem Bestimmen, dass die erste Kennung nicht lokal gespeichert ist, Senden (1140) einer Schlüsselanforderung für den der Anwendungssitzung zugeordneten Sicherheitsschlüssel an die AAnF im Kommunikationsnetz, wobei die Schlüsselanforderung beinhaltet:
eine Anforderung der ersten Kennung der UE; und der Kennung des der UE zugeordneten Sicherheitsschlüssels; und
Empfangen (1150) einer Antwort von der AanF, die den der Anwendungssitzung zugeordneten Sicherheitsschlüssel und
die erste Kennung beinhaltet.

9. Verfahren, das von einer Ankerfunktion für Authentifizierung und Schlüsselverwaltung für Anwendungen, AAnF, in einem Kommunikationsnetz durchgeführt wird, wobei das Verfahren umfasst:
Empfangen (1210) einer Schlüsselanforderung für einen Sicherheitsschlüssel, K_{AF}, der einer Anwendungssitzung zwischen einer Anwendungsfunktion, AF, und einer Benutzereinrichtung, UE, zugeordnet ist, wobei die Schlüsselanforderung eine Anforderung einer ersten Kennung der UE und einer Kennung, A-KID, eines Sicherheitsschlüssels, K_{AKMA} beinhaltet, der der UE zugeordnet ist;
Ableiten (1240) des der Anwendungssitzung zugeordneten Sicherheitsschlüssels aus dem der UE zugeordneten Sicherheitsschlüssel; und
Senden (1250) einer Antwort an die AF, die den der Anwendungssitzung zugeordneten Sicherheitsschlüssel und die erste Kennung beinhaltet.

10. Verfahren nach Anspruch 9, wobei die erste Kennung eine Generic Public Subscription Identifier, GPSI, oder eine Subscription Permanent Identifier, SUPI, ist.

11. Verfahren nach einem der Ansprüche 9 bis 10, wobei die Schlüsselanforderung eine Kennung der AF beinhaltet.

12. Verfahren nach einem der Ansprüche 9 bis 11, wobei:
die Anwendungsfunktion, AF, außerhalb des Kommunikationsnetzes ist und die Schlüsselanforderung von einer Netzexpositionsfunktion, NEF, im Kommunikationsnetz empfangen und die Antwort an diese gesendet wird; oder
die Schlüsselanforderung von der sich im Kommunikationsnetz befindlichen AF empfangen und die Antwort an diese gesendet wird.

13. Anwendungsfunktion, AF, die einem Kommunikationsnetz zugeordnet ist, wobei die AF dazu konfiguriert ist, Operationen entsprechend einem der Verfahren der Ansprüche 1 bis 5 durchzuführen.

14. Netzexpositionsfunktion, NEF, eines Kommunikationsnetzes, wobei die NEF dazu konfiguriert ist, Operationen entsprechend einem der Verfahren der Ansprüche 6 bis 8 durchzuführen.

15. Ankerfunktion für Authentifizierung und Schlüsselverwaltung für Anwendungen, AAnF, in einem Kommunikationsnetz, wobei die AAnF dazu konfiguriert ist, Operationen entsprechend einem der Verfahren der Ansprüche 9 bis 12 durchzuführen.

## Revendications

1. Procédé réalisé par une fonction d'application, AF, associée à un réseau de communication, le procédé comprenant :
l'envoi (1020), à une fonction de réseau, NF, du réseau de communication, d'une demande de clé pour une clé de sécurité, K_{AF}, associée à une session d'application entre l'AF et un équipement utilisateur, UE, dans lequel la demande de clé inclut une demande pour un premier identifiant de l'UE et un identifiant, A-KID, d'une clé de sécurité, K_{AKMA}, associée à l'UE, à partir de laquelle la clé de sécurité associée à la session d'application peut être dérivée ;
la réception (1030), provenant de la NF, d'une réponse qui inclut la clé de sécurité associée à la session d'application et le premier identifiant ; et
l'authentification (1040) de l'UE pour la session d'application sur la base de la réponse.

2. Procédé selon la revendication 1, comprenant en outre la réception, provenant de l'UE, d'une demande d'établissement pour la session d'application.

3. Procédé selon la revendication 2, dans lequel la demande d'établissement inclut l'identifiant de la clé de sécurité associée à l'UE.

4. Procédé selon l'une quelconque des revendications 1 à 3, dans lequel la demande de clé inclut un identifiant de l'AF.

5. Procédé selon l'une quelconque des revendications 1 à 4, dans lequel :
l'AF fait partie du réseau de communication et la demande de clé est envoyée à, et la réponse reçue provenant d'une fonction d'ancrage pour l'authentification et la gestion de clés pour des applications (AAnF) dans le réseau de communication ; ou
l'AF est à l'extérieur du réseau de communication et la demande de clé est envoyée à, et la réponse reçue provenant d'une fonction d'exposition de réseau, NEF, dans le réseau de communication.

6. Procédé réalisé par une fonction d'exposition de réseau, NEF, d'un réseau de communication, le procédé comprenant :
la réception (1110), provenant d'une fonction d'application, AF, à l'extérieur du réseau de communication, d'une demande de clé pour une clé de sécurité, K_{AF}, associée à une session d'application entre l'AF et un équipement utilisateur, UE, dans lequel la demande de clé inclut :
une demande pour un premier identifiant de l'UE et un identifiant, A-KID, d'une clé de sécurité, K_{AKMA}, associée à l'UE, à partir de laquelle la clé de sécurité associée à la session d'application peut être dérivée ; et
l'envoi (1160), à l'AF, d'une réponse qui inclut la clé de sécurité associée à la session d'application et le premier identifiant.

7. Procédé selon la revendication 6, comprenant en outre la détermination (1120) de si le premier identifiant de l'UE est stocké localement au niveau de la NEF.

8. Procédé selon l'une quelconque des revendications 6 à 7, comprenant en outre :
sur la base de la détermination que le premier identifiant n'est pas stocké localement, l'envoi (1140), à l'AAnF dans le réseau de communication, d'une demande de clé pour la clé de sécurité associée à la session d'application, dans lequel la demande de clé inclut :
une demande pour le premier identifiant de l'UE ; et l'identifiant de la clé de sécurité associée à l'UE ; et
la réception (1150), provenant de l'AAnF, d'une réponse qui inclut la clé de sécurité associée à la session d'application et
le premier identifiant.

9. Procédé réalisé par une fonction d'ancrage pour l'authentification et la gestion de clés pour des applications, AAnF, dans un réseau de communication, le procédé comprenant :
la réception (1210) d'une demande de clé pour une clé de sécurité, K_{AF}, associée à une session d'application entre une fonction d'application, AF, et un équipement utilisateur, UE, dans lequel la demande de clé inclut une demande pour un premier identifiant de l'UE et un identifiant, A-KID, d'une clé de sécurité, K_{AKMA}, associée à l'UE ;
la dérivation (1240), à partir de la clé de sécurité associée à l'UE, de la clé de sécurité associée à la session d'application ; et
l'envoi (1250), à l'AF, d'une réponse qui inclut la clé de sécurité associée à la session d'application et le premier identifiant.

10. Procédé selon la revendication 9, dans lequel le premier identifiant est un identifiant d'abonnement public générique, GPSI, ou un identifiant permanent d'abonnement, SUPI.

11. Procédé selon l'une quelconque des revendications 9 à 10, dans lequel la demande de clé inclut un identifiant de l'AF.

12. Procédé selon l'une quelconque des revendications 9 à 11, dans lequel :
la fonction d'application, AF, est à l'extérieur du réseau de communication et la demande de clé est reçue provenant de, et la réponse envoyée à, une fonction d'exposition de réseau, NEF, dans le réseau de communication ; ou
la demande de clé est reçue provenant de, et la réponse envoyée à, l'AF, qui est dans le réseau de communication.

13. Fonction d'application, AF, associée à un réseau de communication, l'AF étant configurée pour réaliser des opérations correspondant à l'un quelconque des procédés des revendications 1 à 5.

14. Fonction d'exposition de réseau, NEF, d'un réseau de communication, la NEF étant configurée pour réaliser des opérations correspondant à l'un quelconque des procédés des revendications 6 à 8.

15. Fonction d'ancrage pour l'authentification et la gestion de clés pour des applications, AAnF, dans un réseau de communication, l'AAnF étant configurée pour réaliser des opérations correspondant à l'un quelconque des procédés des revendications 9 à 12.
